# EUROPÄISCHE PATENTSCHRIFT

(11) **EP 3 210 259 B1**
(45) Veröffentlichungstag und Bekanntmachung des Hinweises auf die Patenterteilung: **26.02.2020**
(21) Anmeldenummer: 15781584.6
(22) Anmeldetag: 19.10.2015
(51) Int. Cl.: H01Q 11/16, H04B 5/00

(54) **ANTENNENVORRICHTUNG FÜR NAHBEREICHSANWENDUNGEN SOWIE VERWENDUNG EINER DERARTIGEN ANTENNENVORRICHTUNG**
ANTENNA DEVICE FOR SHORT-RANGE APPLICATIONS AND USE OF AN ANTENNA DEVICE OF THIS TYPE
DISPOSITIF D'ANTENNE POUR APPLICATIONS EN CHAMP PROCHE AINSI QU'EMPLOI D'UN DISPOSITIF D'ANTENNE DE CE GENRE

(30) Priorität: 23.10.2014 DE 102014015708
(43) Veröffentlichungstag der Anmeldung: 30.08.2017
(73) Patentinhaber: Kilian, Dieter, 82140 Olching (DE)
(72) Erfinder: Kilian, Dieter, 82140 Olching (DE)
(74) Vertreter: Roos, Peter
(86) Internationale Anmeldenummer: PCT/EP2015/002063
(87) Internationale Veröffentlichungsnummer: WO 2016/062391

(56) Entgegenhaltungen:
- DE-A1- 3 514 709
- GB-A- 2 106 357
- US-A1- 2005 040 991
- US-A1- 2005 258 842
- US-A1- 2011 199 920

## Beschreibung

Die vorliegende Erfindung betrifft das Gebiet der Hochfrequenztechnik, insbesondere eine Antennenvorrichtung für Nahbereichsanwendungen wie beispielsweise RFID-Anwendungen, sowie die Verwendung einer derartigen Antennenvorrichtung.

Der Begriff "Nahbereichsanwendungen" im Sinne der Erfindung umfasst insbesondere Anwendungen, bei denen die Übertragung von elektromagnetischer Energie und/oder elektromagnetischen Signalen über Distanzen vorgesehen ist, die kleiner als 5 m, insbesondere kleiner als 1 m sind. Bevorzugt ist diese Distanz jedoch größer als 0,01 m, insbesondere größer als 0,05 m.

Es ist eine Aufgabe der vorliegenden Erfindung, in einfacher Weise eine drahtlose und zuverlässige Übertragung von Energie und/oder Information insbesondere über kurze Distanzen zu realisieren.

Diese Aufgabe wird erfindungsgemäß durch eine Antennenvorrichtung für Nahbereichsanwendungen, insbesondere RFID-Anwendungen, gelöst, welche umfasst:
- eine langgestreckte zweipolige Koaxialleiterstruktur mit einem Innenleiter und einem diesen koaxial umgebenden Mantelleiter,
- an einem ersten Ende der Koaxialleiterstruktur einen Antennensignal-Anschluss, der durch einen Anschlusskontakt am Innenleiter und einen Anschlusskontakt am Mantelleiter gebildet ist, zum Einspeisen eines Antennensendesignals bzw. Ausspeisen eines Antennenempfangssignals,
   an einem zweiten Ende der Koaxialleiterstruktur eine Abschlussimpedanz, die durch einen an einem Anschlusskontakt am Innenleiter und einem Anschlusskontakt am Mantelleiter angeschlossenen Zweipol gebildet ist, wobei der Zweipol wenigstens eine Kapazität und/oder wenigstens eine Induktivität umfasst, derart,
- dass in einem Sendefall ein über den Innenleiter sich ausbreitend das zweite Ende der Koaxialleiterstruktur erreichender HF-Wechselstrom am zweiten Ende der Koaxialleiterstruktur mittels der Abschlussimpedanz auf die Außenseite des Mantelleiters gekoppelt wird, um einen ausgehend vom zweiten Ende der Koaxialleiterstruktur über den Mantelleiter sich ausbreitenden, auf der Außenseite des Mantelleiters fließenden HF-Wechselstrom zu erzeugen, und
- dass in einem Empfangsfall ein über den Mantelleiter sich ausbreitend, auf der Außenseite des Mantelleiters fließender, das zweite Ende der Koaxialleiterstruktur erreichender HF-Wechselstrom am zweiten Ende der Koaxialleiterstruktur mittels der Abschlussimpedanz auf den Innenleiter gekoppelt wird, um einen ausgehend vom zweiten Ende der Koaxialleiterstruktur über den Innenleiter sich ausbreitenden HF-Wechselstrom zu erzeugen.

Die erfindungsgemäße Antennenvorrichtung besitzt vorteilhaft einen relativ einfachen Aufbau, mit dem sich vorteilhaft z. B. eine relativ breitbandige elektromagnetische Übertragung (Senden und/oder Empfangen) von Energie und/oder Information realisieren lässt, beispielsweise eine Kommunikation mit aktiven oder passiven RFID-Transpondern.

Die langgestreckte zweipolige Koaxialleiterstruktur bildet insofern eine "Hauptkomponente" der Antennenvorrichtung, als der eigentliche Sende- bzw. Empfangsvorgang mit dieser Koaxialleiterstruktur, genauer gesagt mit der Außenseite des Mantelleiters der Koaxialleiterstruktur realisiert wird. Im Sendefall wird ein über den Mantelleiter sich ausbreitender, auf der Außenseite desselben fließender HF(Hochfrequenz)-Wechselstrom erzeugt, so dass an dieser Außenseite oberflächliche elektromagnetische "Wanderwellen" erzeugt werden. Im Empfangsfall wird ein auf der Außenseite des Mantelleiters fließender HF-Wechselstrom auf den Innenleiter gekoppelt.

Für die konkrete Gestaltung der "Koaxialleiterstruktur" kann im Rahmen der Erfindung vorteilhaft auf diesbezüglichen Stand der Technik zurückgegriffen werden. Im einfachsten Fall besitzt die Koaxialleiterstruktur eine Gestaltung wie diese von herkömmlichen zweipoligen Koaxialkabeln bekannt ist. Derartige bekannte Strukturen bzw. Kabel besitzen in der Regel einen Innenleiter (Seele) von z. B. kreisförmigem Querschnitt, der von einem z. B. zylindrischen Mantelleiter (typischerweise z. B. als metallisches Drahtgeflecht ausgebildet) umgeben ist. Dokument US2011199920 offenbart einen geschlitzten Koaxialleiter zur Abstrahlung von Leckwellen, wobei der Koaxialleiter eine resistive Abschlussimpedanz umfasst, die den Außen- und Innenleiter verbindet.

Dokument US2005040991 offenbart einen Koaxialkabel, der mit einer invertierten Speisung HF-Ströme über den Außenleiter erregt, sodass der Außenleiter, eventuell zusammen mit externen metallischen Elementen, als Antenne funktioniert. Die Abschlussimpedanz regelt die Kopplung zwischen Innen- und Außenleiter, um eine optimale Anpassung zur Strahlung zu erzielen.

In einer bevorzugten Ausführungsform der Erfindung ist die Koaxialleiterstruktur flexibel krümmbar ausgebildet, wie dies z. B. für ein herkömmliches Koaxialkabel der Fall ist.

Der an einem ersten Ende der Koaxialleiterstruktur vorgesehene "Antennensignal-Anschluss" dient im Sendefall zum Einspeisen eines Antennensendesignals bzw. im Empfangsfall zum Ausspeisen eines Antennenempfangssignals. Dieses Einspeisen bzw. Ausspeisen am Antennensignal-Anschluss erfolgt mittels eines Anschlusskontaktes am Innenleiter und eines Anschlusskontaktes am Mantelleiter.

Der Antennensignal-Anschluss, der durch die beiden genannten Anschlusskontakte gebildet ist, kann zum Betrieb der Antennenvorrichtung beispielsweise über eine zweipolige Leitungsanordnung mit einem Sender, Empfänger oder einer Kombination aus Sender und Empfänger angeschlossen sein. In Längsrichtung der Koaxialleiterstruktur betrachtet befindet sich jeder dieser beiden Anschlusskontakte bevorzugt unmittelbar am oder in geringem Abstand zum ersten Ende (Abstand z. B. kleiner als 5 %, insbesondere kleiner als 1 % der Länge der Koaxialleiterstruktur).

Die an einem zweiten Ende der Koaxialleiterstruktur vorgesehene "Abschlussimpedanz" dient dazu, im Sendefall den über den Innenleiter sich ausbreitend das zweite Ende erreichenden HF-Wechselstrom am zweiten Ende auf die Außenseite des Mantelleiters zu koppeln. Im Empfangsfall dient die Abschlussimpedanz dazu, den über den Mantelleiter sich ausbreitend auf der Außenseite des Mantelleiters fließenden HF-Wechselstrom am zweiten Ende auf den Innenleiter zu koppeln.

Die Abschlussimpedanz ist durch einen am zweiten Ende über Anschlusskontakte am Innenleiter und am Mantelleiter angeschlossenen Zweipol gebildet, wobei der Zweipol wenigstens eine Kapazität und/oder wenigstens eine Induktivität umfasst.

In einer Ausführungsform ist vorgtesehen, dass sich jeder dieser beiden Anschlusskontakte in Längsrichtung der Koaxialleiterstruktur betrachtet unmittelbar am oder in geringem Abstand zum zweiten Ende befindet (Abstand z. B. kleiner als 5 %, insbesondere kleiner als 1 % der Länge der Koaxialleiterstruktur). In einer alternativen Ausführungsform ist jedoch nur einer der beiden Anschlusskontakte in Längsrichtung der Koaxialleiterstruktur betrachtet unmittelbar am oder in geringem Abstand zum zweiten Ende angeordnet, wohingegen der andere Anschluss des Zweipols über eine unmittelbar am Zweipol vorgesehene Erdung (Verbindung mit einer "elektrischen Masse") und über diese Erdung schließlich zu einem Anschlusskontakt unmittelbar am oder in geringem Abstand zum ersten Ende führt.

Die vorgenannten "Kapazitäten" und "Induktivitäten" können schaltungstechnisch in der Praxis z. B. durch entsprechende (separate) "Bauteile" implementiert sein, wobei jedoch im Hinblick auf die hier vorliegenden relativ hohen Frequenzen ("Hochfrequenz") derartige Kapazitäten und Induktivitäten alternativ ganz oder teilweise auch durch hierfür geeignete "Leitergeometrien" ausgebildet sein können. Der Begriff "Hochfrequenz" bedeutet im Sinne der Erfindung, dass das betreffende Signal eine Frequenz bzw. wesentliche Frequenzanteile (z. B. als Trägerfrequenz) besitzt, die oberhalb 1 kHz liegen. Bevorzugt werden beim Betrieb der Antennenvorrichtung sogar Frequenzen von mehr als 50 MHz, insbesondere mehr als 100 MHz vorgesehen.

Bei derartigen, relativ hohen Frequenzen ist somit davon auszugehen, dass die Abschlussimpedanz nicht ausschließlich durch die Impedanz des Zweipols definiert wird, sondern die zum Anschluss dieses Zweipols an den Anschlusskontakten am Innenleiter und am Mantelleiter notwendigerweise vorhandene zweipolige Leiteranordnung als solche eine nicht vernachlässigbare Impedanz besitzt, welche somit in Kombination mit der Impedanz des Zweipols den Wert der Abschlussimpedanz definiert. Beispielsweise können zum Zweipol führende Zuleitungen, je nach Länge, jeweils die Wirkung einer Induktivität besitzen. Außerdem besitzen solche Zuleitungen, je nach Abstand zwischen den Zuleitern, auch eine nennenswerte gegenseitige Kapazität, die analog der Induktivität in die Betrachtung/Dimensionierung eingeht.

Bei der konkreten Ausgestaltung der Abschlussimpedanz sollte daher der Einfluss dieser Leiteranordnung zwischen dem zweiten Ende und dem Zweipol Berücksichtigung finden, wenn es darum geht, die durch die Abschlussimpedanz erfindungsgemäß bezweckte Wirkung (oben erläuterte HF-Strom-Koppelungen) zu erzielen.

Die erfindungsgemäße Antennenvorrichtung lässt sich von ihrem Funktionsprinzip her auch als eine koaxiale Wanderwellen-Antenne bzw. Wanderwellen-Leitung zur elektromagnetischen Informations- und Energieübertragung bezeichnen.

Der Begriff "Wanderwelle" bezieht sich hierbei auf den im Rahmen der Erfindung angestrebten Betriebsmodus der Vorrichtung, bei welchem z. B. beim Senden ausgehend vom zweiten Ende der Koaxialleiterstruktur elektromagnetische Wellen entlang der Struktur, auf der Außenseite des Mantelleiters, in Richtung zum ersten Ende der Koaxialleiterstruktur hin laufen bzw. "wandern", wohingegen beim Empfangen derartige Wanderwellen entlang der Koaxialleiterstruktur, auf der Außenseite des Mantelleiters laufen (und bei Erreichen des zweiten Endes als HF-Wechselstrom auf den Innenleiter gekoppelt werden.

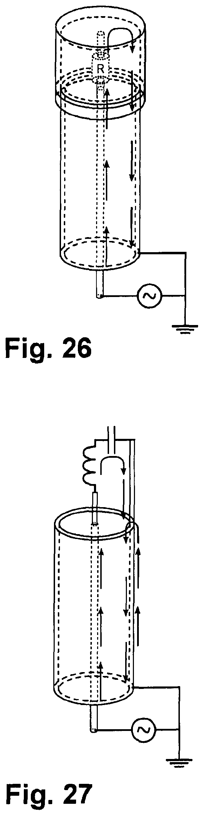

Die Funktionsweise der Vorrichtung im Sendefall, d. h. bei Einspeisung des hochfrequenten Antennensendesignals am Antennensignal-Anschluss des ersten Endes der Koaxialleiterstruktur kann wie folgt beschrieben werden: Das zwischen den Anschlusskontakten am Innenleiter und Mantelleiter angelegte und somit eingespeiste Antennensendesignal wird im Prinzip wie z. B. bei einer herkömmlichen Koaxialleitung entlang der zweipoligen Koaxialleiterstruktur zu deren zweiten Ende hin übertragen. Die durch das zweite Ende bzw. die dort vorgesehene Abschlussimpedanz geschaffene Diskontinuität der Koaxialleiterstruktur in Verbindung mit einer geeigneten Auslegung dieser Abschlussimpedanz zur Bewerkstelligung der vorerwähnten HF-Strom-Koppelungen bewirkt ein Zurücklaufen der elektromagnetischen Wanderwellen als Oberflächenwellen entlang der Koaxialleiterstruktur (an der Außenseite des Mantelleiters) in Richtung des ersten Endes der Koaxialleiterstruktur. Eine konkretere Beschreibung der erfindungsgemäßen Grundidee bzw. des Unterschiedes zum Stand der Technik wird am Ende dieser Beschreibung nochmals anhand eines Vergleichsbeispiels mit Bezug auf die Fig. 26 und 27 gegeben.

Für viele Anwendungen ist es hierbei von Vorteil, wenn die Koaxialleiterstruktur im Sendefall gewissermaßen konzentriert um sich herum ein elektromagnetisches Feld (Wanderwellen) aufbaut, aber nur sehr wenig oder überhaupt keine elektromagnetische Energie durch sich "ablösende" elektromagnetische Wellen abstrahlt. Dieser erfindungsgemäß angestrebte Betriebsmodus kann auch als "coupled mode" bezeichnet werden. Anzumerken ist, dass Krümmungen der Koaxialleiterstruktur eine Ablösung von Wellen erhöhen können, so dass ein oder mehrere gekrümmte Verlaufsabschnitte der Koaxilleiterstruktur vorteilhaft zur Beeinflussung der Antenneneigenschaften (z. B. Reichweite) vorgesehen werden können.

Die Koaxialleiterstruktur kann starr oder flexibel sein. Auch ist es möglich, dass sowohl wenigstens ein starrer Abschnitt als auch wenigstens ein flexibler Anschnitt vorgesehen sind, aus welchen sich die Koaxialleiterstruktur zusammensetzt. Die Länge der langgestreckten Koaxialleiterstruktur kann z. B. mindestens um einen Faktor 10, insbesondere mindestens um einen Faktor 100 größer als eine (maximale) Querausdehnung (z. B. Durchmesser) der Koaxialleiterstruktur sein.

Die Länge der langgestreckten Koaxialleiterstruktur kann z. B. mindestens 0,05 m, insbesondere mindestens 0,1 m betragen. Besonders interessant sind jedoch Anwendungen, bei denen diese Länge noch größer ist. Für die meisten Anwendungen ist es jedoch ausreichend, wenn diese Länge maximal 200 m, insbesondere maximal 100 m beträgt.

In einer Ausführungsform ist vorgesehen, dass diese Länge mindestens das 0,1-fache, insbesondere mindestens das 0,25-fache, insbesondere mindestens das 6-fache, der betriebsmäßig vorgesehenen Wellenlänge der erwähnten Wanderwellen an der Koaxialleiterstruktur beträgt.

In einer Ausführungsform ist vorgesehen, dass diese Länge bei einer betriebsmäßig vorgesehenen Signalfrequenz von bis zu 1 GHz maximal das 500-fache, insbesondere maximal das 300-fache der dementsprechenden Wellenlänge der Wanderwellen ist. Für Betriebsfrequenzen von mehr als 1 GHz ist gemäß einer Ausführungsform vorgesehen, dass diese Länge maximal das 1000-fache, insbesondere maximal das 500-fache der dementsprechenden Wellenlänge der Wanderwellen ist.

Falls, wie dies weiter unten noch erläutert wird, durch die Anordnung eines Gleichtaktstromfilters bzw. einer Oberflächenwellendämpfungseinrichtung eine "aktive" bzw. "effektive" Länge der Koaxialleiterstruktur definiert wird, so sind die vorstehenden Spezifikationen der Länge nicht auf die Länge der (gesamten) Koaxialleiterstruktur, sondern nur auf deren "aktive" bzw. "effektive" Länge zu beziehen.

Eine bevorzugte Verwendung der Antennenvorrichtung ist das Senden und/oder Empfangen eines Signals, z. B. mit einer Trägerfrequenz von mehr als 10 MHz, insbesondere mehr als 100 MHz, und/oder von weniger als 12 GHz, insbesondere weniger als 8 GHz, insbesondere weniger als 5 GHz.

In einer Ausführungsform einer derartigen Verwendung, insbesondere für Nahbereichsanwendungen wie insbesondere z. B. RFID-Anwendungen, wird die Vorrichtung mit einer Betriebsfrequenz (z. B. Trägerfrequenz des Antennensignals im Sendemodus) im Bereich von 400 MHz bis 6 GHz verwendet. In einer Ausführungsform liegt die Betriebsfrequenz z. B. im Bereich von 860 bis 960 MHz (wie z. B. für viele RFID-Anwendungen üblich). In einer anderen Ausführungsform wird eine Betriebsfrequenz im Bereich von 1 bis 3 GHz, beispielsweise etwa 2,4 GHz, verwendet.

Alternativ oder zusätzlich zu einer Informationsübertragung kann bei der Verwendung der Antennenvorrichtung eine Energieübertragung insbesondere z. B. zum drahtlosen (kapazitiven) Aufladen von elektrischen Energiespeichern (z. B. Akkus) von elektrischen bzw. elektronischen Einheiten (z. B. RFID-Tags bzw. mit RFID-Tags versehene Artikel, elektische bzw elektronische Geräte etc.), insbesondere mobilen oder tragbaren Einheiten (z. B. Mobiltelefone, Mobilrechner wie "Tablet-PCs", "Smartphones" etc.) vorgesehen sein.

Besonders vorteilhaft kann die Vorrichtung zur Informations- und/oder Energieübertragung zwischen der Koaxialleiterstruktur und betreffenden Einheiten verwendet werden, die sich in einer näheren Umgebung um die Koaxialleiterstruktur herum befinden. Als Definition der "näheren Umgebung" kann z. B. das Kriterium einer maximalen Distanz zwischen Koaxialleiterstruktur und betreffender Einheit herangezogen werden. Der Begriff "Distanz" soll hierbei den minimalen Abstand zwischen der Einheit und jedem Teil der Koaxialleiterstruktur bezeichnen. Die nähere Umgebung kann im Rahmen der erfindungsgemäßen Verwendung z. B. durch eine maximale Distanz von höchstens 5 m, insbesondere höchstens 3 m, insbesondere höchstens 1 m, insbesondere höchstens 0,5 m definiert sein. Anschaulich ausgedrückt befinden sich die Einheiten dann innerhalb eines gedachten, die Koaxialleiterstruktur umgebenden "Schlauches" mit einem Durchmesser der vorgenannten Größe.

Beispielsweise kann die Antennenvorrichtung auch zur Informations- und/oder Energieübertragung für drahtlose Sensoren, aktive oder passive (RFID-)Transponder oder dergleichen verwendet werden.

Der Innenleiter und der Mantelleiter der Koaxialleiterstruktur sind elektrisch leitend (z. B. aus metallischem Material). Im einfachsten Fall besitzt der Innenleiter einen kreisrunden Querschnitt und der Mantelleiter einen kreisringförmigen Querschnitt.

Abweichend von kreisrunden Querschnittskonturen sind auch andere Querschnittskonturen für den Innenleiter und/oder den Mantelleiter möglich, beispielsweise rechteckige bzw. quadratische Formen, oder z. B. ovale Formen.

Der Innenleiter kann massiv oder als Hohlleiter ausgebildet sein.

Der Querschnitt des Innenleiters und/oder der Querschnitt des Mantelleiters sind über die Länge der Koaxialleiterstruktur im einfachsten Fall einheitlich.

In Radialrichtung betrachtet zwischen Innenleiter und Mantelleiter kann eine elektrische Isolierung bzw. ein Dielektrikum (einschließlich z. B. Luft) angeordnet sein. Radial außerhalb des Mantelleiters, der wie der Innenleiter bevorzugt aus einem metallischen Material gebildet ist, kann z. B. eine elektrische Isolierung (z. B. aus Kunststoff) vorgesehen sein, nachfolgend auch als "Isoliermantel" der Koaxialleiterstruktur bezeichnet.

Wie bereits erläutert dient die am zweiten Ende der Koaxialleiterstruktur vorgesehene Abschlussimpedanz dazu, die Koppelung von HF-Wechselströmen, im Sendefall vom Innenleiter auf die Außenseite des Mantelleiters und im Empfangsfall von der Außenseite des Mantelleiters auf den Innenleiter, zu bewerkstelligen.

Gemäß einer Ausführungsform, insbesondere im Hinblick auf die bevorzugte "coupled mode"-Betriebsweise, ist die Antennenvorrichtung bzw. deren Abschlussimpedanz so ausgestaltet, dass eine aufgrund einer Einspeisung eines Antennensendesignals am zweiten Ende ankommende Energie dieses Antennensendesignals zu mehr als 50 % als "an der Koaxialleiterstruktur gebundene "Wanderwelle" ausgehend vom zweiten Ende zurück in Richtung des ersten Endes läuft. In diesem Fall wird also weniger als 50 % der am zweiten Ende ankommenden Energie als elektromagnetische Welle von der Koaxialleiterstruktur abgestrahlt (bzw. anderweitig dissipiert).

Alternativ oder zusätzlich kann die Antennenvorrichtung bzw. deren Abschlussimpedanz so ausgestaltet sein, dass die Energie eines an dem Antennensignal-Anschluss des ersten Endes der Koaxialleiterstruktur eingespeisten Antennensendesignals zu mehr als 30 %, insbesondere mehr als 40 % als an der Koaxialleiterstruktur gebundene Wanderwelle ausgehend vom zweiten Ende zurück in Richtung des ersten Endes läuft.

In einer Ausführungsform umfasst der von der Abschlussimpedanz beinhaltete "Zweipol" wenigstens eine Kapazität und wenigstens eine Induktivität.

In einer Ausführungsform umfasst der Zweipol wenigstens einen ohmschen Widerstand, wobei ein Widerstandswert dieses ohmschen Widerstandes kleiner als das 0,5-fache oder größer als das 2-fache eines Wellenwiderstandes der Koaxialleiterstruktur ist. Bei dieser Dimensionierung des Widerstandswertes werden vorteilhaft größere elektrische Verluste durch einen Stromfluss über den Widerstand vermieden.

In einer bevorzugten Ausführungsform ist vorgesehen, dass die Abschlussimpedanz (von ihrem Wert her) wenigstens annähernd einem Wellenwiderstand der Koaxialleiterstruktur entspricht. Insbesondere kann hierfür ein Realteil der Abschlussimpedanz im Bereich des 0,9-fachen bis 1,1-fachen des Wellenwiderstands der Koaxialleiterstruktur liegen.

In einer Ausführungsform ist der Zweipol durch eine Schaltungsanordnung auf einem Schaltungsträger (insbesondere z. B. Schaltungsträgerplatte) ausgebildet. Diese Schaltungsanordnung kann darüber hinaus eine zweipolige Leiteranordnung umfassen, welche den Zweipol mit den Anschlusskontakten am Innenleiter und am Mantelleiter verbindet, oder einen Abschnitt (insbesondere z. B. einen Großteil) einer derartigen Leiteranordnung. Die Anschlusskontakte am Innenleiter und am Mantelleiter können jeweils z. B. als Lötpunkte implementiert sein.

Der Begriff "Schaltungsanordnung" bezeichnet im Sinne der Erfindung eine Anordnung diskreter Bauelemente (z. B. Kondensatoren, Spulen, Widerstände etc.) und/oder elektrisch leitfähiger jedoch gegeneinander elektrisch isolierter Bereiche (z. B. Leiterbahnen, Leiterflächen, Durchkontaktierungen etc. auf einer Schaltungsträgerplatte), welche aufgrund ihrer geometrischen Formgestaltung und ihrer gegenseitigen Anordnung zueinander (unter Berücksichtigung der Eigenschaften der Umgebung, z. B. der Eigenschaften von Isolierungsmaterialien bzw. dadurch gebildeter "Dielektria") die Wirkung derartiger "Bauelemente" besitzen.

In einer Ausführungsform bildet eine zur Implementierung des Zweipols vorgesehene Schaltungsanordnung wenigstens einen HF-Strompfad aus, der von dem Anschlusskontakt am Innenleiter, ggf. über "Zuführungsleiter", weiter über ein oder mehrere Bauelemente (seien sie diskret und/oder durch eine wie erläuterte "Leitergeometrie" implementiert) zum Anschlusskontakt am Mantelleiter führt (Alternativ oder zusätzlich kann auch ein HF-Strompfad zu einem Erdungsanschluss unmittelbar am Zweipol führen).

Bevorzugt besitzt die Schaltungsanordnung eine relativ "kompakte" räumliche Ausdehnung, die sich an das zweite Ende der Koaxialleiterstruktur anschließt, so dass etwaige elektromagnetische Abstrahlungen unmittelbar aus dem Bereich des Zweipols stark unterdrückt sind (Bei einer "voluminöseren" räumlichen Ausdehnung des Zweipols erhöht sich die im Rahmen der Erfindung nicht gewünschte Tendenz von elektromagnetischen Abstrahlungen aus dem Bereich des Zweipols).

Bevorzugt ist die Schaltungsanordnung so ausgelegt bzw. wird die Antennenvorrichtung zum Senden so betrieben, dass am zweiten Ende der Koaxialleiterstruktur ein dem Wechselstrom auf dem Innenleiter möglichst betragsgleicher Gleichtaktstrom auf die Außenseite des Mantelleiters gekoppelt wird (z. B. mit Betrag von wenigstens 80% des Betrages des Innenleiterstromes). Die vorerwähnte "kompakte" räumliche Ausdehnung der Schaltungsanordnung begünstigt in der Regel stark die Erreichung dieses Ziels.

Was die durch die Schaltungsanordnung implementierte Formgestaltung bzw. räumliche Ausdehnung des Zweipols (einschließlich der zum Anschluss desselben vorgesehenen elektrischen Leiter, nachfolgend auch als Zuführungen bezeichnet) anbelangt, so ist diese Ausdehnung gemäß einer Ausführungsform "schlank", d.h. langgestreckt vorgesehen. Gemäß dieser Ausführungsform ist diese Ausdehnung in einer Lateralrichtung also kleiner als in einer Längsrichtung.

In einer diesbezüglichen Ausführungsvariante ist die vorerwähnte "Längsrichtung" des Zweipols (einschließlich etwaiger Zuführungen) identisch mit der Längsrichtung der Koaxialleiterstruktur, bzw. bei gekrümmtem Verlauf derselben identisch mit der Längsrichtung der Koaxialleiterstruktur an deren zweitem Ende. Mit anderen Worten erstreckt sich der Zweipol bei dieser Ausführung dann "in Fortsetzung" der Längsrichtung der Koaxialleiterstruktur.

In einer anderen Ausführungsvariante ist die vorerwähnte Längsrichtung des Zweipols (einschließlich etwaiger Zuführungen) in einem Winkel zur Längsrichtung der Koaxialleiterstruktur an deren zweitem Ende orientiert. Mit anderen Worten erstreckt sich der Zweipol bei dieser Ausführung zwar auch in "schlanker Form", allerdings nicht in Fortsetzung der Längsrichtung der Koaxialleitertstruktur orientiert, sondern ist beispielsweise "abgewinkelt" am zweiten Ende der Koaxialleiterstruktur angeordnet.

In einer bevorzugten Ausführungsform ist die Ausdehnung eines langgestreckten Zweipols (einschließlich etwaiger Zuführungen) in seiner Lateralrichtung kleiner als das 10-fache, insbesondere kleiner als das 5-fache, der lateralen Ausdehnung des Mantelleiters am zweiten Ende der Koaxialleiterstruktur.

In einer bevorzugten Ausführungsform ist die Ausdehnung des Zweipols (einschließlich etwaiger Zuführungen) kleiner als 3 cm, insbesondere kleiner als 2 cm.

Bei all diesen Ausführungsformen, welche die Ausdehnung eines Zweipols in seiner Lateralrichtung genauer spezifizieren, können wie vorstehend bereits erwähnt, die Längsrichtungen der Koaxialleiterstruktur und des Zweipols identisch oder voneinander verschieden sein.

In einer Ausführungsform ist in Längsrichtung der Koaxialleiterstruktur betrachtet im Abstand zum zweiten Ende der Koaxialleiterstruktur ein Gleichtaktstromfilter bzw. eine Oberflächenwellendämpfungseinrichtung angeordnet, also ein Mittel, welches eine Dämpfung der Oberflächenwellen (Wanderwellen) und/oder eine Unterdrückung des Gleichtaktanteils des mit den Oberflächenwellen verbundenen HF-Stromes bewirkt. Ein solches Filter bzw. eine solche Einrichtung kann hierbei z. B. in einem Abstand zum zweiten Ende der Koaxialleiterstruktur angeordnet sein, der mindestens dem 0,1-fachen, insbesondere mindestens dem 0,25-fachen, insbesondere mindestens dem 6-fachen, der im Betrieb sich ergebenden Wellenlänge der Wanderwellen am Mantelleiter entspricht. Durch diesen gewählten Abstand wird eine "aktive" bzw. "effektive" Länge der Koaxialleiterstruktur definiert (Koaxialleiterstrukturabschnitt vom zweiten Ende bis zum Gleichtaktstromfilter bzw. der Oberflächenwellendämpfungseinrichtung).

Gemäß dieser Ausführungsform kann beispielsweise am Außenumfang des Mantelleiters (z. B. einen Isoliermantel der Koaxialleiterstruktur umgebend) eine Oberflächenwellendämpfungseinrichtung zur Dämpfung der Wanderwellen angeordnet sein. Eine derartige Oberflächenwellendämpfungseinrichtung ist insofern vorteilhaft, als damit der Bereich der erwähnten zurücklaufenden Wanderwellen entlang der Koaxialleiterstruktur gut definiert begrenzt werden kann. Die Dämpfungseinrichtung dient dazu, die Energie eintreffender zurücklaufender Wanderwellen zumindest größtenteils zu absorbieren. In einer Ausführungsform weist die Dämpfungseinrichtung hierfür wenigstens einen Ferritring auf, welcher den Außenumfang des Mantelleiters umgibt. Insbesondere können auch mehrere Ferritringe in Längsrichtung der Koaxialleiterstruktur hintereinander angeordnet sein, welche (mit oder ohne gegenseitigem Abstand) jeweils den Außenumfang des Mantelleiters umgeben. In einer Weiterbildung ist der Ferritring (bzw. wenigstens einer von mehreren Ferritringen) verschiebbar an der Koaxialleiterstruktur angebracht.

Alternativ oder zusätzlich zu wenigstens einem den Mantelleiter umgebenden Ferritring kann die Oberflächenwellendämpfungseinrichtung auch als eine im Verlauf der Koaxialleiterstruktur zwischengefügte Dämpfungseinheit umfassend eine Schaltungsanordnung (z. B. aus kapazitiven und/oder induktiven und/oder resistiven Elementen) implementiert sein. Eine derartige Schaltungsanordnung zur Oberflächenwellendämpfung kann insbesondere als ein Gleichtaktstromfilter ausgebildet sein.

Sowohl hinsichtlich der Ausgestaltung mit Ferritringen als auch der Ausgestaltung mit einer zwischengefügten (oder alternativ am ersten Ende der Koaxialleiterstruktur angefügten) Schaltungsanordnung in Form eines Gleichtaktstromfilters kann vorteilhaft auf entsprechenden Stand der Technik aus anderen Gebieten zurückgegriffen werden. Hinsichtlich der Bedeutung des Begriffes "Schaltungsanordnung" in diesem Zusammenhang, sowie die Möglichkeiten zur Implementierung einer solchen Schaltungsanordnung sei auf die oben bereits gegebenen Erläuterungen betreffend die Ausbildung des Zweipols durch eine Schaltungsanordnung verwiesen.

In einer Ausführungsform umfasst die Oberflächenwellendämpfungseinrichtung eine Erdung des Mantelleiters. Eine solche Erdung (also galvanische Verbindung zu einem Erd- bzw. "elektrische Masse"-Anschluss) kann z. B. am Außenumfang des Mantelleiters vorgesehen sein, z. B. mittels einer am Außenumfang des Mantelleiters angebrachten "Erdungsmanschette". Eine solche Erdungsmanschette kann z. B. geteilt aus mehreren (z. B. zwei) Manschettenteilen (bzw. -hälften) ausgebildet sein, die zur Anbringung mechanisch und elektrisch miteinander verbunden (z. B. verschraubt) werden.

In einer Weiterbildung umfasst die Antennenvorrichtung ferner:
- eine zweite langgestreckte zweipolige Koaxialleiterstruktur mit einem Innenleiter und einem diesen koaxial umgebenden Mantelleiter,
- an einem ersten Ende der zweiten Koaxialleiterstruktur ein Sender-/Empfänger-Anschluss, der durch einen Anschlusskontakt am Innenleiter und einen Anschlusskontakt am Mantelleiter gebildet ist, zum Anschluss eines Senders und/oder Empfängers für ein mit der Antennenvorrichtung zu sendendes bzw. ein von der Antennenvorrichtung zu empfangendes Signal,
- an einem zweiten Ende der zweiten Koaxialleiterstruktur eine signalkreuzende Kopplung mit dem ersten Ende der Koaxialleiterstruktur, mittels welcher der Innenleiter der zweiten Koaxialleiterstruktur mit dem Mantelleiter der Koaxialleiterstruktur gekoppelt ist und der Mantelleiter der zweiten Koaxialleiterstruktur mit dem Innenleiter der Koaxialleiterstruktur gekoppelt ist.

Was den Aufbau der bei dieser Weiterbildung vorgesehenen zweiten Koaxialleiterstruktur anbelangt, so können sämtliche weiter oben bereits für die (erste) Koaxialleiterstruktur erläuterten Details bzw. Ausführungsformen, einzeln oder in Kombinantionen, vorgesehen sein. Dies betrifft beispielsweise das Material, die Formgestaltung (z. B. Querschnitt) und die Anordnung von Innenleiter und Mantelleiter zueinander, wie auch die Möglichkeit, die zweite Koaxialleiterstruktur mit einem Isoliermatel zu versehen, die zweite Koaxialleiterstruktur starr oder flexibel auszubilden usw.

Bei dieser Weiterbildung erfolgt das Einspeisen eines Antennensendesignals bzw. das Ausspeisen eines Antennenempfangssignals zwar ebenfalls am ersten Ende der (ersten) Koaxialleiterstruktur. Der Sender bzw. Empfänger (bzw. eine Sender/Empfänger-Kombination) ist in Verwendungssituation jedoch nicht unmittelbar an dieser Stelle angeschlossen, um an dieser Stelle das Einspeisen bzw. Ausspeisen zu bewerkstelligen. Vielmehr ist dieser Anschluss am ersten Ende der zweiten Koaxialleiterstruktur vorgesehen, so dass das zu sendende bzw. zu empfangende Signal über die zweite Koaxialleiterstruktur läuft, welche an ihrem ersten Ende den Sender/Empfänger-Anschluss zum Anschluss des Senders bzw. Empfängers aufweist und an ihrem zweiten Ende über die "signalkreuzende Kopplung" mit dem ersten Ende der (ersten) Koaxialleiterstruktur verbunden ist.

In einer Ausführungsform ist die signalkreuzende Kopplung gebildet durch eine elektrische Verbindung eines Anschlusskontaktes am Innenleiter der zweiten Koaxialleiterstruktur mit einem Anschlusskontakt am Mantelleiter der Koaxialleiterstruktur und eine elektrische Verbindung eines Anschlusskontaktes am Mantelleiter der zweiten Koaxialleiterstruktur mit einem Anschlusskontakt am Innenleiter der Koaxialleiterstruktur.

In einer Ausführungsform ist die signalkreuzende Kopplung durch einen "Vierpol" ausgebildet, der als eine Schaltungsanordnung auf einem Schaltungsträger (z. B. Schaltungsträgerplatte) ausgebildet ist. Hinsichtlich der Bedeutung des Begriffes "Schaltungsanordnung" in diesem Zusammenhang, sowie die Möglichkeiten zur Implementierung einer solchen Schaltungsanordnung sei auf die oben bereits gegebenen Erläuterungen betreffend die Ausbildung des Zweipols durch eine Schaltungsanordnung verwiesen.

Der "Vierpol" wird im einfachsten Fall durch zwei "sich kreuzende" Leiter (z. B. Leiterbahnen auf einer Schaltungsträgerplatte) realisiert, d. h. galvanische Verbindungen einerseits zwischen dem Innenleiter der zweiten Koaxialleiterstruktur und dem Mantelleiter der Koaxialleiterstruktur und andererseits zwischen dem Mantelleiter der zweiten Koaxialleiterstruktur und dem Innenleiter der Koaxialleiterstruktur.

Alternativ kann der Vierpol z. B. durch einen Transformator ausgebildet sein, von welchem eine erste Transformatorwicklung an Innenleiter und Mantelleiter der Koaxialleiterstruktur und eine zweite Transformatorwicklung an Innenleiter und Mantelleiter der zweiten Koaxialleiterstruktur angeschlossen ist.

Bei der erfindungsgemäßen Antennenvorrichtung können eine oder mehrere lösbare elektrische Verbindungen, insbesondere z. B. elektrische Steckverbindungen vorgesehen sein. Damit können eine oder mehrere Vorrichtungskomponenten vorteilhaft auch einzeln anschließbar (bzw. auswechselbar) ausgeführt werden, um so einen modularen "Antennenbaukasten" zu erhalten. Die Antennenvorrichtung oder wenigstens ein Teil davon kann dann aus Einzelteilen dem jeweiligen Installations- und Betriebsanforderungen entsprechend zusammengebaut (z. B. gesteckt, und ggf. verschraubt) werden. So ist eine flexible Konfiguration der Vorrichtung "vor Ort" möglich.

Als derart "modular" ausgeführte Vorrichtungskomponenten kommen insbesondere in Betracht: Koaxialleiterstruktur, Abschlussimpedanz (Zweipol mitsamt Zuführungen), einzelne Komponenten des Zweipols (z. B. Schaltungsanordnungsteile wie z. B. Induktivitäten, Kapazitäten, Widerstände bzw. derartiges implementierende Module), Gleichtaktstromfilter (z. B. Transformator), "zweite Koaxialleiterstruktur" (mit oder ohne signalkreuzende Kopplung), signalkreuzende Kopplung. Je nach Komponente können diese mit einer oder zwei (beidseitig) lösbaren elektrischen Anschlusseinrichtungen (z. B. Steck- und ggf. Schraubverbinder) ausgestattet sein.

Die Erfindung wird nachfolgend anhand von Ausführungsbeispielen mit Bezug auf die beigefügten Zeichnungen weiter beschrieben. Es stellen dar:
- Fig. 1: zeigt eine Antennenvorrichtung gemäß eines Ausführungsbeispiels,
- Fig. 2: zeigt eine Antennenvorrichtung gemäß eines weiteren Ausführungsbeispiels (Konkretisierung des Beispiels gemäß Fig. 1),
- Fig. 3: zeigt eine Antennenvorrichtung gemäß eines weiteren Ausführungsbeispiels (Konkretisierung des Beispiels gemäß Fig. 1),
- Fig. 4: zeigt eine Antennenvorrichtung gemäß eines weiteren Ausführungsbeispiels (Konkretisierung des Beispiels gemäß Fig. 1),
- Fig. 5: zeigt ein Ausführungsbeispiel für eine Implementierung einer Abschlussimpedanz einer Antennenvorrichtung,
- Fig. 6: zeigt ein weiteres Ausführungsbeispiel für eine Implementierung einer Abschlussimpedanz einer Antennenvorrichtung,
- Fig. 7: zeigt ein weiteres Ausführungsbeispiel für eine Implementierung einer Abschlussimpedanz einer Antennenvorrichtung,
- Fig. 8: zeigt ein weiteres Ausführungsbeispiel für eine Implementierung einer Abschlussimpedanz einer Antennenvorrichtung,
- Fig. 9: zeigt ein weiteres Ausführungsbeispiel für eine Implementierung einer Abschlussimpedanz einer Antennenvorrichtung,
- Fig. 10: ist eine Darstellung zur Veranschaulichung des Einflusses einer zweipoligen Leiteranordnung auf den Wert einer Abschlussimpedanz,
- Fig. 11: ist eine weitere Darstellung zur Veranschaulichung des Einflusses einer zweipoligen Leiteranordnung auf den Wert einer Abschlussimpedanz,
- Fig. 12: ist eine weitere Darstellung zur Veranschaulichung des Einflusses einer zweipoligen Leiteranordnung auf den Wert einer Abschlussimpedanz,
- Fig. 13: zeigt eine Antennenvorrichtung gemäß eines weiteren Ausführungsbeispiels (Konkretisierung des Beispiels gemäß Fig. 1),
- Fig. 14: ist eine Seitenansicht einer beispielhaften Implementierung des Ausführungsbeispiels von Fig. 13,
- Fig. 15: ist eine Draufsicht der Implementierung des Ausführungsbeispiels von Fig. 13,
- Fig. 16: zeigt eine Antennenvorrichtung gemäß eines weiteren Ausführungsbeispiels (Konkretisierung des Beispiels gemäß Fig. 1),
- Fig. 17: ist eine Seitenansicht einer beispielhaften Implementierung des Ausführungsbeispiels von Fig. 16,
- Fig. 18: ist eine Draufsicht der Implementierung des Ausführungsbeispiels von Fig. 16,
- Fig. 19: zeigt eine Antennenvorrichtung gemäß eines weiteren Ausführungsbeispiels, mit einer Oberflächenwellendämpfungseinrichtung,
- Fig. 20: zeigt eine Antennenvorrichtung gemäß eines weiteren Ausführungsbeispiels, mit einem Transformator bzw. Gleichtaktstromfilter,
- Fig. 21: zeigt eine Antennenvorrichtung gemäß eines weiteren Ausführungsbeispiels, mit einer signalkreuzenden Kopplung zwischen ersten und zweiten Koaxialleiterstrukturen,
- Fig. 22: zeigt eine Antennenvorrichtung gemäß eines weiteren Ausführungsbeispiels mit einer signalkreuzenden Kopplung zwischen ersten und zweiten Koaxialleiterstrukturen,
- Fig. 23: zeigt eine Antennenvorrichtung gemäß eines weiteren Ausführungsbeispiels mit einer signalkreuzenden Kopplung zwischen ersten und zweiten Koaxialleiterstrukturen,
- Fig. 24: zeigt eine Antennenvorrichtung gemäß eines weiteren Ausführungsbeispiels mit einem Transformator bzw. Gleichtaktstromfilter,
- Fig. 25: zeigt eine Antennenvorrichtung gemäß eines weiteren Ausführungsbeispiels mit einem Transformator bzw. Gleichtaktstromfilter,
- Fig. 26: zeigt ein Beispiel einer gemäß des Stands der Technik "korrekt abgeschlossenen" Koaxialleiterstruktur zur Signalübertragung, und
- Fig. 27: zeigt, im Vergleich zum Beispiel gemäß Fig. 26, ein Beispiel des Einsatzes einer erfindungsgemäßen Abschlussimpedanz an einer Koaxialleiterstruktur.

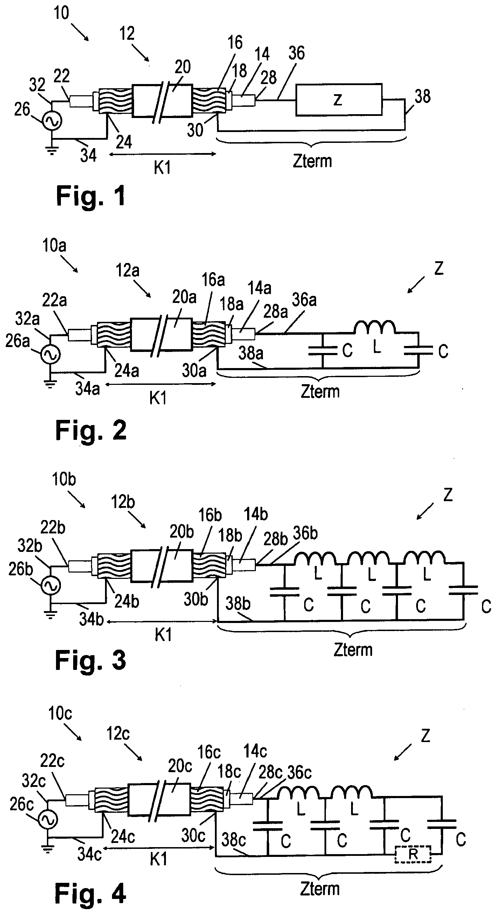

Fig. 1 zeigt eine Antennenvorrichtung 10 für Nahbereichsanwendungen, insbesondere RFID- und/oder drahtlose Energiespeicherlade-Anwendungen, umfassend eine langgestreckte zweipolige Koaxialleiterstruktur 12 mit einem Innenleiter 14 und einem diesen koaxial umgebenden Mantelleiter 16.

Im dargestellten Ausführungsbeispiel sind der Innenleiter 14 und der Mantelleiter 16 jeweils aus einer flexiblen metallischen Struktur (hier z. B. Drahtgeflecht bzw. Metallfolie) ausgebildet, wobei der Innenleiter 14 eine drahtförmige bzw. zylindrische Formgestaltung und der Mantelleiter 16 eine hohlzylindrische Formgestaltung besitzt, und wobei zur elektrischen Isolation der beiden Leiter 14, 16 zwischen denselben eine Isolierlage 18 und radial außerhalb der Leiter 14, 16 ein Isoliermantel 20 angeordnet sind.

Mit einer ebenfalls flexiblen Gestaltung der Isolierlage 18 und des Isoliermantels 20, z. B. aus einem entsprechenden Kunststoffmaterial, ergibt sich somit eine insgesamt flexibel krümmbare Ausgestaltung der Koaxialleiterstruktur 12.

Die Koaxialleiterstruktur 12 besitzt somit eine Gestaltung, wie diese von herkömmlichen zweipoligen "Koaxialkabeln" bekannt ist. Eine Länge K1 der Koaxialleiterstruktur 12 ist in Fig. 1 verkürzt dargestellt. In der Praxis kann die Länge K1 z. B. typischerweise im Bereich von ca. 0,1 m bis ca. 100 m liegen. Außerdem sind in Fig. 1 der Deutlichkeit der Darstellung halber die Endabschnitte der Leiter 14, 16 relativ weit aus den beiderseitigen Enden des Isoliermantels 20 herausragend eingezeichnet. In der Praxis kann dieses Herausragen des Mantelleiters 16 aus dem Isoliermantel 20 und des Innenleiters 14 aus der Isolierlage 18 bzw. dem Mantelleiter 16 wesentlich kleiner (oder überhaupt nicht) vorgesehen sein. Wesentlich ist in diesem Zusammenhang lediglich die Realisierung von elektrischen Kontaktierungen der Leiter 14, 16 mittels diverser Anschlusskontakte, auf die nachfolgend eingegangen wird.

Die Antennenvorrichtung 10 umfasst ferner einen an einem ersten Ende (in Fig. 1 links) vorgesehenen Antennensignal-Anschluss, der durch einen Anschlusskontakt 22 am Innenleiter 14 und einen Anschlusskontakt 24 am Mantelleiter 16 gebildet ist, um an diesem Antennensignal-Anschluss 22, 24 ein Antennensendesignal einzuspeisen bzw. ein Antennenempfangssignal auszuspeisen.

Im Beispiel von Fig. 1 ist der Antennensignal-Anschluss 22, 24 an einem HF (Hochfrequenz)-Sender 26 angeschlossen, so dass ein mit der Antennenvorrichtung 10 zu sendendes Signal vom Sender 26 erzeugt und am ersten Ende der Koaxialleiterstruktur 12 eingespeist werden kann.

Soweit bei diesem wie auch den nachfolgenden Ausführungsbeispielen von einem Sender die Rede ist, so versteht sich, dass am Antennensignal-Anschluss 22, 24 in Verwendungssituation auch ein Empfänger oder bevorzugt eine Sender/Empfänger-Kombination angeschlossen sein kann.

Die Antennenvorrichtung 10 kann z. B. zum Senden und/oder Empfangen eines Signals mit einer Trägerfrequenz von mehr als 100 MHz verwendet werden. In der Regel kann die Vorrichtung 10 für derartige Frequenzen von bis zu ca. 12 GHz ausgelegt sein.

Die Antennenvorrichtung 10 umfasst ferner eine an einem zweiten Ende (in Fig. 1 rechts) der Koaxialleiterstruktur 12 vorgesehene Abschlussimpedanz Zterm, die durch einen an einem Anschlusskontakt 28 am Innenleiter 14 und einem Anschlusskontakt 30 am Mantelleiter 16 angeschlossenen Zweipol Z gebildet ist.

Der Begriff "Abschlussimpedanz" bzw. das Bezugszeichen "Zterm" wird der Einfachheit halber in dieser Beschreibung sowohl für die entsprechende gegenständliche Vorrichtungskomponente als auch die entsprechende physikalische Größe (Impedanz) verwendet. Analoges gilt für das Bezugszeichen "Z", welches hier der Einfachheit halber sowohl für die entsprechende gegenständliche Vorrichtungskomponente (Zweipol) als auch die entsprechende physikalische Größe (Impendanz bzw. Zweipolimpedanz) verwendet wird.

In Fig. 1 sind der linke Teil und der rechte Teil jeweils schematisiert als Blockschaltbild zu verstehen.

Insofern ist der Verlauf von elektrischen Leitern 32, 34 (zum Anschluss des Senders 26) wie auch von Leitern 36, 38 (zum Anschluss des Zweipols Z) beispielhaft bzw. "schaltplanmäßig" zu verstehen.

Eine Besonderheit der Antennenvorrichtung 10 besteht darin, dass
- der Zweipol Z wenigstens eine Kapazität und/oder wenigstens eine Induktivität umfasst, und zwar derart,
- dass in einem Sendefall ein über den Innenleiter 14 sich ausbreitend das zweite Ende der Koaxialleiterstruktur 12 erreichender HF-Wechselstrom am zweiten Ende der Koaxialleiterstruktur 12 mittels der Abschlussimpedanz Zterm auf die Außenseite des Mantelleiters 16 gekoppelt wird, um einen ausgehend vom zweiten Ende der Koaxialleiterstruktur 12 über den Mantelleiter 16 sich ausbreitenden, auf der Außenseite des Mantelleiters 16 fließenden HF-Wechselstrom zu erzeugen, und
- dass in einem Empfangsfall ein über den Mantelleiter 16 sich ausbreitend, auf der Außenseite des Mantelleiters 16 fließender, das zweite Ende der Koaxialleiterstruktur 12 erreichender HF-Wechselstrom am zweiten Ende der Koaxialleiterstruktur 12 mittels der Abschlussimpedanz Zterm auf den Innenleiter 14 gekoppelt wird, um einen ausgehend vom zweiten Ende der Koaxialleiterstruktur 12 über den Innenleiter 14 sich ausbreitenden HF-Wechselstrom zu erzeugen.

Bevorzugt umfasst der Zweipol Z (bzw. dessen "Ersatzschaltbild") wenigstens eine Kapazität und wenigstens eine Induktivität. Falls der Zweipol Z auch einen oder mehrere ohmsche Widerstände umfasst, so ist für jeden dieser Widerstände bevorzugt vorgesehen, dass der Widerstandswert kleiner als das 0,5-fache oder größer als das 2-fache des so genannten Wellenwiderstandes der Koaxialleiterstruktur 12 ist. In einer vorteilhaften Ausführungsform entspricht die Abschlussimpedanz Zterm wenigstens annähernd diesem Wellenwiderstand der Koaxialleiterstruktur 12.

Bei den in Verwendungssituation relativ hohen Frequenzen der betreffenden HF-Wechselströme bzw. "Wanderwellen" ist es in der Praxis in der Regel so, dass die Abschlussimpedanz Zterm nicht ausschließlich durch die Zweipolimpedanz Z definiert wird (also Zterm = Z), sondern die zweipolige Leiteranordnung 36, 38 als solche eine nicht vernachlässigbare Impedanz bzw. Impedanzen hervorruft, welche somit in Kombination mit der Zweipolimpedanz Z den Wert der Abschlussimpedanz Zterm bestimmen.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Die Fig. 2 bis 4 zeigen beispielhaft einige Ausführungsbeispiele von Antennenvorrichtungen 10a, 10b bzw. 10c, die insofern als Konkretisierungen des Beispiels von Fig. 1 betrachtet werden können, als bei jedem dieser Beispiele gemäß der Fig. 2 bis 4 ein Schaltbild (bzw. Ersatzschaltbild) einer konkreten Ausgestaltung des Zweipols Z dargestellt ist.

Fig. 2 zeigt eine im Rahmen der Erfindung vorteilhafte Ausgestaltung des Zweipols Z mit (wenigstens) einer Induktivität L und (wenigstens) zwei Kapazitäten C.

Fig. 3 zeigt eine im Rahmen der Erfindung vorteilhafte Ausgestaltung des Zweipols Z mit (wenigstens) drei Induktivitäten L und (wenigstens) vier Kapazitäten C.

Fig. 4 zeigt eine im Rahmen der Erfindung vorteilhafte Ausgestaltung des Zweipols Z mit (wenigstens) zwei Induktivitäten L und (wenigstens) vier Kapazitäten C. Außerdem veranschaulicht Fig. 4 die Möglichkeit im Rahmen der Erfindung, wenigstens einen ohmschen Widerstand R (in Fig. 4 gestrichelt eingezeichnet) in der Schaltung des Zweipols Z vorzusehen, wobei es zur Vermeidung von elektrischen Verlusten besonders vorteilhaft ist, wenn dieser bzw. jeder solche Widerstand R deutlich kleiner oder deutlich größer als der Wellenwiderstand der betreffenden Koaxialleiterstruktur 12c ist.

Eine weitere, im Rahmen der Erfindung vorteilhafte Besonderheit sämtlicher Beispiele gemäß der Fig. 2 bis 4 besteht darin, dass die in den Zweipol Z einmündenden Enden der Leiter 36a, 36b bzw. 36c und 38a, 38b bzw. 38c innerhalb des Zweipols Z über eine Kapazität C miteinander verbunden sind, wobei bevorzugt von (wenigstens) einem der entsprechenden Anschlusspunkte an dieser Kapazität C der betreffende Leiter (36a, 36b bzw. 36c und/oder 38a, 38b bzw. 38c) über eine Induktivität L weitergeführt (in Verlängerung des betreffenden Leiters) wird.

Wenngleich die Darstellung des Zweipols Z in den Fig. 2 bis 4 jeweils in erster Linie schaltplanmäßig zu verstehen ist, so können die in diesen Figuren eingezeichneten Kapazitäten C, Induktivitäten L bzw. der Widerstand R tatsächlich durch entsprechende "Bauelemente" (z. B. Kondensatoren, Spulen, Widerstände) mit entsprechenden Leitungsverbindungen zwischen diesen Bauteilen implementiert werden. Solche Leitungsverbindungen können z. B. auf einem Schaltungsträger wie einer Schaltungsträgerplatte als Leiterbahnen realisiert sein, wobei derselbe Schaltungsträger auch die genannten Bauelemente trägt. Alternativ oder zusätzlich können die in den Schaltbildern dargestellten Elemente C, L und R jedoch auch durch eine Schaltungsanordnung auf einem Schaltungsträger, insbesondere z. B. einer Schaltungsträgerplatte durch eine entsprechende geometrische Formgestaltung und gegenseitige Anordnung von elektrisch leitfähigen, jedoch gegeneinander elektrisch isolierten Bereichen (z. B. Leiterbahnen, Leiterflächen, Durchkontaktierungen etc.) implementiert werden. Derartige leitfähige Bereiche an oder in einem Schaltungsträger können ferner auch zur wenigstens abschnittweisen Implementierung der Zuführungsleiter 36a, 36b bzw. 36c und 38a, 38b bzw. 38c vorgesehen sein.

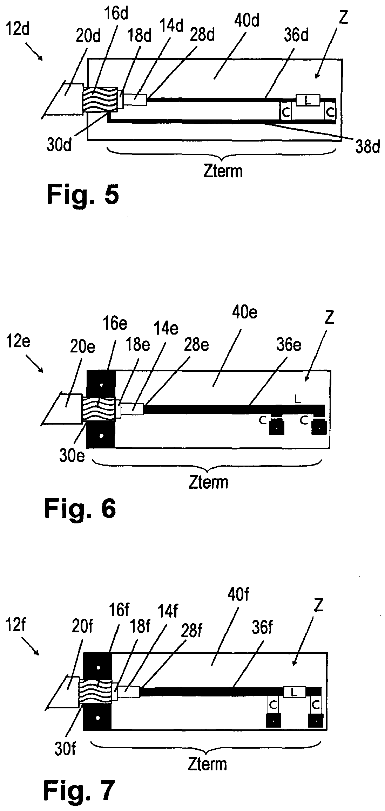

Fig. 5 zeigt beispielsweise ein Ausführungsbeispiel für eine Implementierung einer Abschlussimpedanz Zterm als eine Schaltungsanordnung auf einer Schaltungsträgerplatte 40d. Die Leiter 36d, 38d sind hierbei ganz oder teilweise durch entsprechende Leiterbahnen der in diesem Beispiel einseitig mit Bauelementen zur Realisierung der dargestellten Induktivität L und der dargestellten Kapazitäten C vorgesehen. Zwischen den Leiterbahnen und den Anschlusskontakten 28d, 30d können gegebenenfalls kurze, beiderendig verlötete Kabelstücke vorgesehen sein. Alternativ kann wenigstens einer der Anschlusskontakte 28d, 30d auch unmittelbar als Lötpunkt an der betreffenden Leiterbahn (Leiter 36d und/oder Leiter 38d) ausgebildet sein.

Abweichend von Fig. 5 könnten die Anschlusskontakte 28d, 30d anstatt als Lötpunkte auch als eine lösbare Verbindung implementiert sein. So könnte die Schaltungsträgerplatte 40d z. B. über eine geeignete Verbindereinrichtung (z. B. koaxiale Steckverbindung) an die Koaxialleiterstruktur 12d anschließbar sein. Falls die Koaxialleiterstruktur 12d durch ein herkömmliches Koaxialkabel mit bereits angeordnetem Koaxialverbinder ausgebildet ist, so kann hierfür an der Schaltungsträgerplatte 40d ein passender Gegenverbinder vorgesehen werden.

Das Implementierungsbeispiel gemäß Fig. 5 ist augenscheinlich zur Realisierung einer Antennenvorrichtung geeignet, wie diese bereits mit Bezug auf Fig. 2 beschrieben wurde.

Falls, wie in Fig. 5 dargestellt, relativ lange Leiter 36d, 38d zur Verbindung der Koaxialleiterstruktur 12d mit dem Zweipol Z vorgesehen werden, so kann damit in Anbetracht der hohen Signalfrequenzen gezielt die Wirkung einer jeweiligen Induktivität für die Leiter 36d und 38d erreicht werden. Es versteht sich, dass derartige "Zuführungen" 36d, 38d abweichend von der Darstellung in Fig. 5 auch wesentlich kürzer sein können.

Fig. 6 zeigt ein gegenüber Fig. 5 in zweierlei Weise modifiziertes Ausführungsbeispiel für die Implementierung einer Abschlussimpedanz Zterm. Im Unterschied zu dem Beispiel gemäß Fig. 5 sind bei dem Beispiel gemäß Fig. 6 die Induktivität L und die Kapazitäten C nicht als entsprechende Bauteile ausgebildet, sondern durch eine solchen Bauteilen äquivalente geometrische Formgestaltung und Anordnung von Leiterbahnen auf einer Schaltungsträgerplatte 40e. Außerdem ist bei dem Beispiel gemäß Fig. 6 die Schaltungsträgerplatte 40e beidseitig genutzt. Während der vom Anschlusskontakt 28e zum Zweipol Z laufende Leiter 36e auf der in Fig. 6 oberen (sichtbaren) Flachseite der Schaltungsträgerplatte 40e verläuft, ist der weitere Leiter durch eine (hier vollflächige) elektrische Beschichtung der in Fig. 6 unteren (nicht sichtbaren) Flachseite realisiert. Die weißen Punkte in Fig. 6 stellen Durchkontaktierungen dar, über welche zum Einen der auf der Oberseite angeordnete Anschlusskontakt und zum Anderen in Fig. 6 jeweilige untere Anschlüsse der Kapazitäten C elektrisch mit der Unterseite der Schaltungsträgerplatte 40e verbunden werden.

Fig. 7 zeigt ein weiteres Ausführungsbeispiel für die Implementierung einer Abschlussimpedanz Zterm, bei welchen Details aus den Beispielen gemäß der Fig. 5 und 6 kombiniert werden. So sind bei dem Beispiel gemäß Fig. 7 ebenfalls diskrete Bauelemente zur Implementierung der Induktivität L und der Kapazitäten C an der Oberseite einer Schaltungsträgerplatte 40f angeordnet. Andererseits ist bei dem Beispiel gemäß Fig. 7 die Implementierung der beiden Leiter zwischen dem zweiten Ende der Koaxialleiterstruktur 12f und dem Zweipol Z so wie bei dem Beispiel gemäß Fig. 6 vorgesehen. Abweichend von diesem Beispiel sind auch andere Kombinationen von L und C denkbar, die je nach geforderter Bandbreite und Betriebsfrequenz konzipiert werden können.

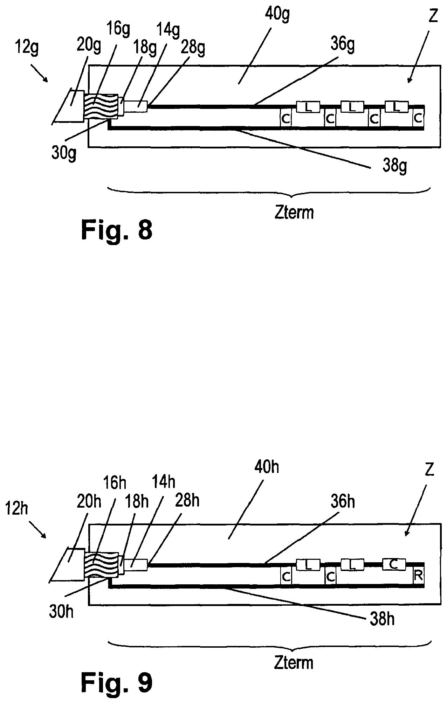

Die Fig. 8 und 9 zeigen jeweils ein weiteres Ausführungsbeispiel für die Implementierung einer Abschlussimpedanz Zterm, welches im Wesentlichen dem Beispiel gemäß Fig. 5 entspricht, wobei jedoch jeweils die Anzahl bzw. Anordnung von Induktivitäten L und Kapazitäten C variiert ist. Bei dem Beispiel gemäß Fig. 9 ist außerdem wie dargestellt ein ohmscher Widerstand R in der den Zweipol Z bildenden Schaltungsanordnung vorgesehen.

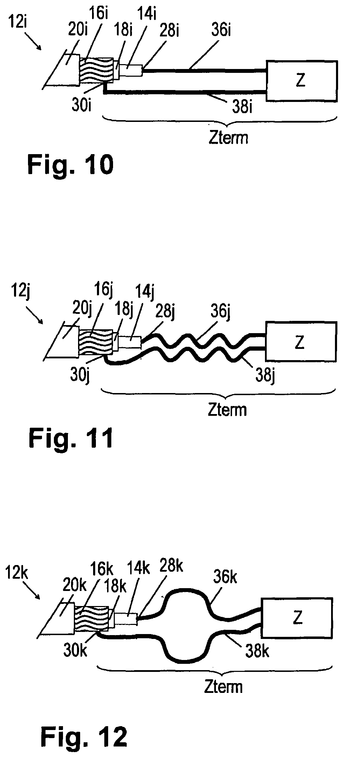

Die Fig. 10 bis 12 veranschaulichen nochmals den Umstand, dass der Wert der Abschlussimpedanz Zterm je nach Gestaltung der Zuführungsleiter 36i, 38i bzw. 36j, 38j bzw. 36k, 38k mehr oder weniger von dem Impedanzwert des Zweipols Z abweicht. Die Fig. 10 bis 12 zeigen jeweils beispielhaft unterschiedliche Verläufe der Leiter 36i, 36j, bzw. 36k und 38i,. 38j bzw. 38k. Falls der Wert der Abschlussimpedanz Zterm in einer bestimmten Weise dimensioniert werden soll (z. B. wenigstens annähernd einem Wellenwiderstand der Koaxialleiterstruktur 12i, 12j bzw. 12k entsprechend), so sollte der Einfluss der beiden Leiter 36i, 38i bzw. 36j, 38j bzw. 36k, 38k auf den sich ergebenden Wert der Abschlussimpedanz Zterm daher berücksichtigt werden.

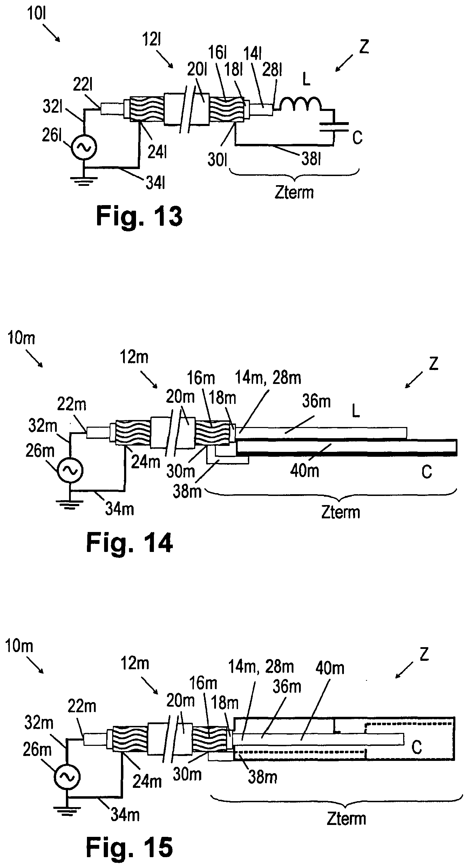

Fig. 13 zeigt eine Antennenvorrichtung 10 gemäß eines weiteren Ausführungsbeispiels, ähnlich den Beispielen gemäß der Fig. 2 bis 4. Im Unterschied zu den letzteren Beispielen ist bei dem Beispiel gemäß Fig. 13 jedoch eine vereinfachte Schaltungsanordnung zur Realisierung des Zweipols Z vorgesehen. Diese Schaltungsanordnung besteht aus einer Reihenschaltung einer Induktivität L und einer Kapazität C.

Für dieses schaltplanmäßig in Fig. 13 dargestellte Beispiel der Abschlussimpedanz Zterm ist mit den Fig. 14 (Seitenansicht) und 15 (Draufsicht) eine konkrete Implementierung der Abschlussimpedanz Zterm dargestellt.

Wie aus den Fig. 14 und 15 ersichtlich, wird der Zweipol Z wieder durch eine Schaltungsanordnung auf einer Schaltungsträgerplatte 40m ausgebildet. Ein an der Oberseite (in Fig. 14 oben) angeordneter Leiter 36m bildet aufgrund seiner entsprechenden Länge die Induktivität L. Ein distaler Endabschnitt des Leiters 36m bildet zusammen mit einer in Fig. 15 rechts gestrichelt eingezeichneten elektrisch leitfähigen Beschichtung der Unterseite der Schaltungsträgerplatte 40m (und dem Material der Schaltungsträgerplatte 40m als Dielektrikum) die Kapazität C. Diese unterseitige (z. B. metallische) Beschichtung setzt sich wie in Fig. 15 ebenfalls gestrichelt dargestellt auf der Unterseite zur Ausbildung des Leiters 38m fort.

Aus den Fig. 14 und 15 ist auch ein für die Erfindung allgemein vorteilhaftes Implementierungsdetail ersichtlich, welches darin besteht, am zweiten Ende der Koaxialleiterstruktur 12m den Innenleiter 14m einstückig (und z. B. geradlinig) als eine "Innenleitererweiterung" aus der Koaxialleiterstruktur 12m herausragen (bzw. vom Ende des Mantelleiters 16m hervorstehen) zu lassen, um damit in einfacher Weise sowohl den bei anderen Ausführungen hier vorgesehenen Anschlusskontakt (vgl. z. B. 28l in Fig. 13) als auch den Leiter 36m zu implementieren (wobei der Leiter 36l im Beispiel gemäß der Fig., 14 und 15 wiederum sogar gleichzeitig eine Induktivität L implementiert).

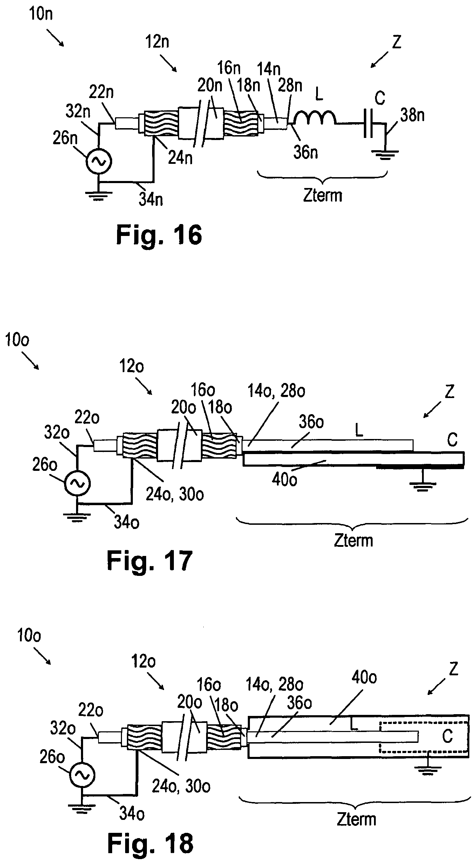

Fig. 16 zeigt eine Antennenvorrichtung 10n gemäß eines weiteren Ausführungsbeispiels, welches im Wesentlichen dem Beispiel gemäß Fig. 13 entspricht. Im Unterschied zu dem Beispiel gemäß Fig. 13, wie auch den übrigen bisher beschriebenen Ausführungsbeispielen, ist bei dem Beispiel gemäß Fig. 16 der Zweipol Z unmittelbar (am zweiten Ende der Koaxialleiterstruktur 12n) bzw. "auf kurzem Weg" nur mit einem Leiter (hier: Leiter 36n) verbunden, wohingegen ein zweiter Leiter 38n vom Zweipol Z ausgehend unmittelbar an einen Erdungskontakt (elektrische Masse, z. B. an einem metallischen Vorrichtungsgehäuse oder dergleichen) angeschlossen ist. Wie aus Fig. 16 ersichtlich, ist ein Anschluss eines Senders 26n sowohl ebenfalls an einem Erdungskontakt angeschlossen als auch an einem Anschlusskontakt 24n am Mantelleiter 16n. Insofern könnte man auch sagen, dass der zweite Leiter 38n ausgehend vom Zweipol Z über die Erdung (elektrische Masse) und weiter am ersten Ende der Koaxialleiterstruktur 12n mit dem Mantelleiter 16n (am Anschlusskontakt 24n) verbunden ist.

Für dieses in Fig. 16 schaltplanmäßig dargestellte Ausführungsbeispiel ist eine beispielhafte Implementierung mit den Fig. 17 (Seitenansicht) und 18 (Draufsicht) veranschaulicht.

Wie aus den Fig. 17 und 18 ersichtlich, bildet der an der Oberseite einer Schaltungsträgerplatte 40o angeordnete Leiter 36o aufgrund seiner entsprechenden Länge die Induktivität L. Ein distales Ende des Leiters 36o bildet zusammen mit einer elektrisch leitfähigen (z. B. metallischen) Beschichtung an der Unterseite der Schaltungsträgerplatte 40o (zusammen mit dem Material der Schaltungsträgerplatte 40o als Dielektrikum) die Kapazität C.

Bei dem Beispiel gemäß der Fig. 17 und 18 ist im Unterschied zu dem Beispiel gemäß der Fig. 14 und 15 der die "untere Kondensatorplatte" bildende Beschichtungsbereich der Schaltungsträgerplatte 40o jedoch nicht über eine entsprechende Leiterbahn zum zweiten Ende Kaxialleiterstruktur 12o geführt, sondern unmittelbar mit einem Erdungskontakt (elektrische Masse) verbunden.

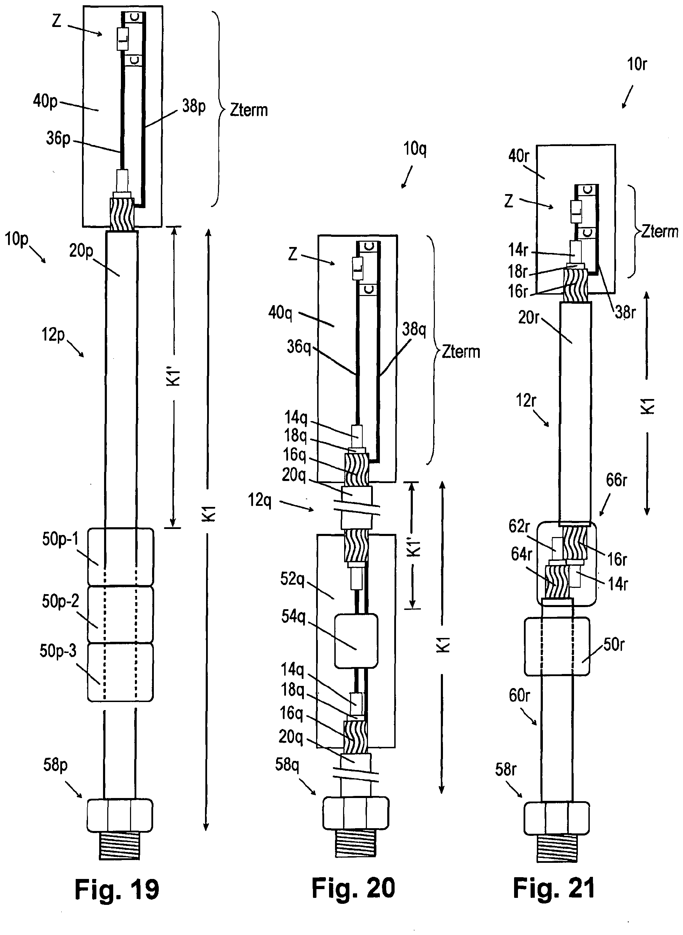

Fig. 19 zeigt eine Antennenvorrichtung 10p gemäß eines weiteren Ausführungsbeispiels, bei welchem eine Abschlussimpedanz Zterm gemäß des Beispiels von Fig. 5 implementiert ist. Eine Besonderheit der Antennenvorrichtung 10p besteht darin, dass in Längsrichtung einer Koaxialleiterstruktur 12p betrachtet im Abstand zum zweiten Ende der Koaxialleiterstruktur 12p eine Oberflächenwellendämpfungseinrichtung angeordnet ist. Diese wird im dargestellten Beispiel durch mehrere (hier: drei) in Längsrichtung hintereinander angeordnete Ferritringe 50p-1, 50p-2 und 50p-3 realisiert. Die Einspeisung bzw. Ausspeisung des zu sendenden bzw. zu empfangenden Signals erfolgt an einem Antennensignalanschluss 58p (hier: zweipoliger Schraubanschluss).

Die Anordnung der Ferritringe 50p-1 bis 50p-3 ist insofern vorteilhaft, als damit z. B. im Sendefall der Bereich der vom zweiten Ende der Koaxialleiterstruktur 12p "zurücklaufenden Wanderwellen" entlang der Koaxialleiterstruktur 12p gut definiert werden kann. In an sich bekannter Weise bewirken derartige Ferritringe eine weitgehende Absorption der Energie eintreffender zurücklaufender Wanderwellen.

In Fig. 19 ist außer der tatsächlichen Länge K1 der Koaxialleiterstruktur 12p auch eine "aktive" bzw. "effektive" Länge K1' dieser Koaxialleiterstruktur 12p eingezeichnet. In diesem "aktiven Abschnitt" können sich Wanderwellen ausbreiten.

In einer Ausführungsform sind mehrere Ferritringe, wie z. B. die in Fig. 19 dargestellten Ferritringe 50p-1 bis 50p-3, in jeweils fester Position entlang der Länge K1 angeordnet (mit oder ohne gegenseitigen Abstand). Alternativ können einzelne oder sämtliche der mehreren Ferritringe auch entlang der Koaxialleiterstruktur verschiebbar vorgesehen sein (um eine Einstellbarkeit der Eigenschaften der Antennenvorrichtung zu ermöglichen). Mittels derartiger Ferritringe an der Koaxialleiterstruktur, wie z. B. den Ferritringen 50p-1 bis 50p-3 bei dem Beispiel gemäß Fig. 19, kann zusätzlich vorteilhaft die Antennenimpedanz der erfindungsgemäßen Vorrichtung beeinflusst und/oder auf ein gewünschtes Ausmaß eingestellt werden.

Fig. 20 zeigt ein weiteres Ausführungsbeispiel einer Antennenvorrichtung 10q, welches in Aufbau und Funktion im Wesentlichen dem Beispiel von Fig. 19 entspricht. Im Unterschied zu dem Beispiel von Fig. 19 ist bei dem Beispiel von Fig. 20 lediglich anstelle der Ferritringe ein auf einer Schaltungsträgerplatte 52q in eine Koaxialleiterstruktur 12q integrierter Transformator 54q vorgesehen, welcher somit an dieser Stelle ein "Gleichtaktstromfilter" realisiert (und gleichzeitig die Wirkung einer "Oberflächenwellendämpfungseinrichtung" realisiert). Der Transformator 54q kann z. B. als ein Bauteil vorgesehen sein, mit welchem die Schaltungsträgerplatte 52q bestückt ist, wobei der elektrische Anschluss des Transformators 54q über Leiterbahnen realisiert ist, die über entsprechende Anschlusskontakte mit dem Innenleiter 14q und dem Mantelleiter 16q der Koaxialleiterstruktur 12q verbunden sind. Die Koaxialleiterstruktur 12q ist bei diesem Beispiel gewissermaßen an einer Stelle aufgetrennt und über die von der Schaltungsträgerplatte 52q gebildete Schaltungsanordnung (hier: Transformator 54q) wieder zusammengefügt.

Abweichend von der Darstellung in Fig. 20 kann die mit dem Transformator 54q bestückte Schaltungsträgerplatte 52q z. B. auch als auswechselbare Einheit (z. B. steck- und/oder anschraubbar) eingefügt sein.

Wie dargestellt wird die Gesamtlänge K1 der Koaxialleiterstruktur 12q wieder aufgeteilt, einerseits in einen aktiven (wanderwellenführenden) Abschnitt einer Länge K1' und andererseits einen verbleibenden Abschnitt, welcher lediglich zur Signalleitung (z. B. von einem Sender oder zu einem Empfänger) dient.

Fig. 21 zeigt ein weiteres Ausführungsbeispiel einer Antennenvorrichtung 10r mit einem Aufbau ähnlich demjenigen der Beispiele gemäß der Fig. 2, 5 und 19, wobei jedoch abweichend davon gemäß einer Weiterbildung die Antennenvorrichtung 10r ferner umfasst:
- eine zweite langgestreckte zweipolige Koaxialleiterstruktur 60r mit einem Innenleiter 62r und einem diesen koaxial umgebenden Mantelleiter 64r,
- an einem ersten Ende (in Fig. 21 links) der zweiten Koaxialleiterstruktur 60r ein Sender-/Empfänger-Anschluss 58r, der durch einen Anschlusskontakt am Innenleiter 62r und einen Anschlusskontakt am Mantelleiter 64r gebildet ist, zum Anschluss eines Senders und/oder Empfängers (in Fig. 21 nicht dargestellt) für ein mit der Antennenvorrichtung 10r zu sendendes bzw. ein von der Antennenvorrichtung 10r zu empfangendes Signal,
- an einem zweiten Ende (in der Mitte von Fig. 21) der zweiten Koaxialleiterstruktur 60r eine signalkreuzende Kopplung 66r mit dem ersten Ende der Koaxialleiterstruktur 12r, mittels welcher der Innenleiter 62r der zweiten Koaxialleiterstruktur 60r mit dem Mantelleiter 16r der Koaxialleiterstruktur 12r gekoppelt ist und der Mantelleiter 64r der zweiten Koaxialleiterstruktur 60r mit dem Innenleiter 14r der Koaxialleiterstruktur 12r gekoppelt ist. Bevorzugt sind als Kopplungen galvanische Verbindungen zwischen den betreffenden Leitern vorgesehen.

Bei dieser Weiterbildung gemäß Fig. 21 erfolgt das Einspeisen eines Antennensendesignals bzw. das Ausspeisen eines Antennenempfangssignals (mittels eines angeschlossenen Senders bzw. Empfängers) nicht direkt am ersten Ende der Koaxialleiterstruktur 12r, sondern über die zusätzlich vorgesehene, über die signalkreuzende Kopplung 66r angeschlossene zweite Koaxialleiterstruktur 60r.

Die elektrischen Verbindungen zwischen Innenleiter 62r und Mantelleiter 16r sowie Mantelleiter 64r und Innenleiter 14r sind in diesem Beispiel als entsprechende Lötstellen realisiert. Alternativ zu solchen Lötstellen ist z. B. auch eine elektrische Steckverbindung (hier: mit gekreuzten Kontakten) möglich. In diesem Fall kann die signalkreuzende Kopplung 66r dann vorteilhaft als ein "Modul" zum Aufbau der Antennenvorrichtung eingebaut werden.

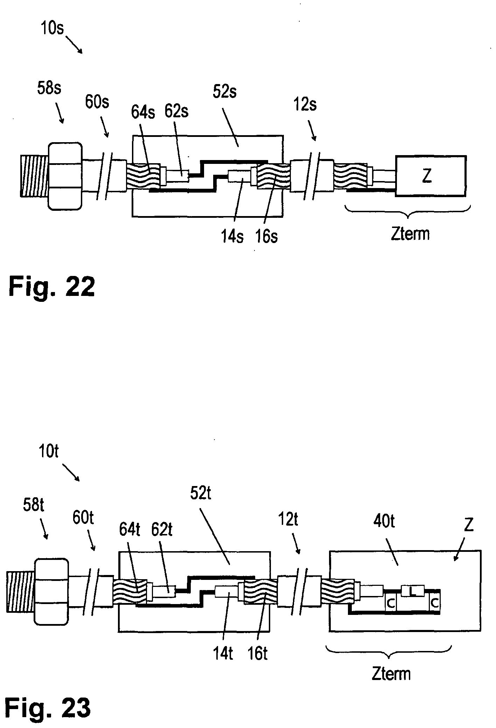

Fig. 22 zeigt eine Antennenvorrichtung 10s gemäß eines weiteren Ausführungsbeispiels, bei welchem wie bei dem Beispiel gemäß Fig. 21 eine zweite Koaxialleiterstruktur 60s vorgesehen ist, die über eine signalkreuzende Kopplung mit der Koaxialleiterstruktur 12s verbunden ist. Wie ersichtlich, ist die signalkreuzende Kopplung wieder dadurch realisiert, dass der Innenleiter 62s galvanisch mit dem Mantelleiter 16s und der Mantelleiter 64s galvanisch mit dem Innenleiter 14s verbunden ist. Abweichend von dem Beispiel gemäß Fig. 21 wird für diese Verbindung jedoch eine Schaltungsträgerplatte 52s verwendet, auf welcher diese galvanischen Verbindungen als Leiterbahnen ausgeführt sind und die entsprechenden Innenleiter und Mantelleiter z. B. durch Lötstellen angebunden sind.

Fig. 23 zeigt eine Antennenvorrichtung 10t gemäß eines weiteren Ausführungsbeispiels, ähnlich dem Beispiel gemäß Fig. 22. Das Beispiel von Fig. 23 kann insofern als eine Konkretisierung des Beispiels von Fig. 22 angesehen werden, als bei der Antennenvorrichtung 10t die Abschlussimpedanz Zterm von ihrer Implementierung her konkreter dargestellt ist (nämlich entsprechend etwa dem Beispiel gemäß Fig. 5).

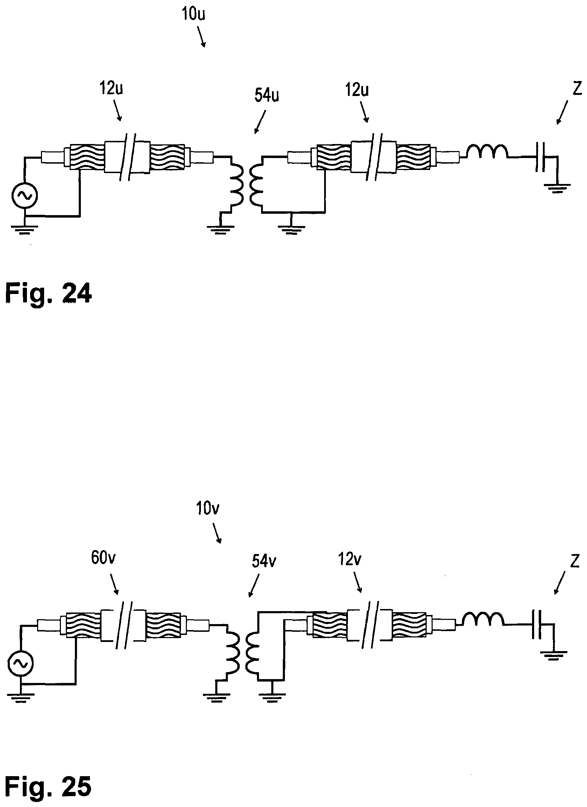

Die Fig. 24 und 25 zeigen Antennenvorrichtungen 10u bzw. 10v gemäß zweier weiterer Ausführungsbeispiele, die jeweils ähnlich dem Beispiel gemäß Fig. 16 ausgebildet sind. Im Unterschied zu dem Beispiel gemäß Fig. 16 ist jedoch (ähnlich dem Beispiel gemäß Fig. 20) wieder jeweils ein Transformator 54u bzw. 54v integriert, der als Gleichtaktstromfilter und Oberflächenwellendämpfungseinrichtung wirkt. Der Transformator 54u bzw. 54v kann z. B. als eine auswechselbare Einheit bzw. Modul (z. B. steck- und/oder anschraubbar) eingefügt sein.

Die Beispiele gemäß der Fig. 24 und 25 unterscheiden sich in der "Polung" der in den Figuren rechten Transformatorwicklungen. Während bei Fig. 24 eine "nicht-signalkreuzende" Kopplung zwischen zwei Abschnitten einer Koaxialleiterstruktur 12u realisiert ist, erfolgt bei Fig. 25 eine "signalkreuzende Kopplung" zwischen einer Koaxialleiterstruktur 12v und einer zweiten Koaxialleiterstruktur 60v.

Zusammenfassend kann mit der vorliegenden Erfindung eine vorteilhafte koaxiale Wanderwellen-Leitung zur Informations- und Energieübertragung bereitgestellt werden. Zur Ausbildung eines "aktiven Antennenbereiches" kann vorteilhaft auf eine an sich bekannte, insbesondere z. B. flexibel krümmbare Koaxialleiterstruktur zurückgegriffen werden, wobei diese Koaxialleiterstruktur jedoch anders als im Stand der Technik nicht zur einfachen Signalübertragung genutzt wird, sondern durch Abschluss mit einer geeigneten Abschlussimpedanz in ihrer Funktionalität vorteilhaft erweitert bzw. "umfunktioniert" wird. Die Abschlussimpedanz kann vorteilhaft mit sehr geringen elektrischen Verlusten die im Sendefall und Empfangsfall erforderlichen Signalkopplungen bereitstellen. Insbesondere bei Ausbildung durch ein Netzwerk von Induktivitäten und/oder Kapazitäten (und/oder relativ kleinen oder relativ großen ohmschen Widerständen) wird das zu sendende bzw. zu empfangende Signal im Bereich der Abschlussimpedanz nicht nennenswert geschwächt. Die Funktionsweise der Antennenvorrichtung beruht darauf, dass an der Außenseite des Mantelleiters der Koaxialleiterstruktur ein nicht-kompensiertes (Gleichtakt-)Signal als Oberflächen- bzw. Mantelwelle geführt wird.

Mit Bezug auf die Fig. 26 und 27 sei abschließend nochmals anhand eines Vergleichsbeispiels die Grundidee der Erfindung detaillierter veranschaulicht.

Fig. 26 zeigt beispielhaft eine herkömmliche Koaxialleiterstruktur zur Signalübertragung. An einem ersten, in Fig. 26 unteren Ende wird ein HF-Signal eines Senders in den Innenleiter eingespeist. Der Mantelleiter ist an diesem ersten Ende mit Masse/Erde verbunden. Dieser Anschluss ist nur exemplarisch gezeichnet, daher wurde auf die korrekte Darstellung eines an dieser Stelle z. B. üblichen koaxialen Steckverbinders verzichtet.

An einem zweiten, in Fig. 26 oberen Ende ist ein Abschlusswiderstand R "korrekt" angeschlossen (Der Widerstand R ist typischerweise entsprechend dem Wellenwiderstand der Koaxialleiterstruktur gewählt, oftmals z. B. als 50Ω-Widerstand). Die koaxiale Struktur wird an diesem zweiten Ende fortgeführt und der Mantelleiter ist an keiner Stelle unterbrochen (galvanische Verbindung). Dadurch bleibt die abschirmende Wirkung über das Anschlussende (zweites Ende) erhalten; der Mantelleiter wirkt wie ein Faraday'scher Käfig.

Die Pfeile in Fig. 26 symbolisieren eine Momentaufnahme eines HF-Wechselstromes, der sich über den Innenleiter ausbreitet. Der Strom im Innenleiter führt dazu, dass dem Mantelleiter ein betragsgleicher Strom aufgeprägt wird, der jedoch genau entgegengesetzt fließt. Dieser "Rückstrom" besitzt aufgrund des Skineffekts nur eine geringe Eindringtiefe im Mantelleiter und dringt aufgrund der geschlossenen metallischen Abschirmung an keiner Stelle nach außen.

Fig. 27 zeigt beispielhaft zum Vergleich eine ähnlich aufgebaute und gespeiste Koaxialleiterstruktur, deren Abschluss am zweiten Ende jedoch gemäß des Konzeptes der Erfindung modifiziert ist.

Im Beispiel von Fig. 27 ist anstelle des koaxialen Abschlusswiderstandes R eine dipolare Leiterstruktur direkt mit dem Mantel- bzw. Innenleiter verbunden, was nach dem Stand der Technik (vgl. Fig. 26) in jedem Fall zu vermeiden ist. Durch die Öffnung des Mantels eröffnet sich dem aufgeprägten Rückstrom auf der Innenseite des Mantelleiters ein zusätzlicher Pfad entlang der Außenseite des Mantelleiters. Der Skineffekt erlaubt nun, dass beide Ströme fließen können, ohne den Mantelleiter vollständig zu durchfluten.

Wie aus den Strompfeilen in Fig. 27 ersichtlich ist, entspricht diese Kopplung gleichsam einer "Umleitung" auf die Außenseite unter "Umlenkung" der Fließrichtung um 180°. Überraschenderweise ist der "Außenstrom" nun phasengleich mit dem ursprünglichen "Signalstrom" im Innenleiter. Es ist geradezu so, als ob dieser direkt an der Außenseite des Mantelleiters angeschlossen wäre. Da beide Ströme gleichphasig sind, kann man von einer Gleichtaktkopplung sprechen. Ein im Rahmen der Erfindung hierbei bevorzugt angestrebtes Ziel ist einerseits eine möglichst verlustfreie Terminierung (am zweiten Ende) zu schaffen und andererseits bei einer solchen Terminierung den Stromfluss auf der Außenseite des Mantelleiters zu maximieren, so dass im Idealfall neben Phasengleichheit auch annähernd Betragsgleichheit außen auf dem Mantelleiter herrscht.

Der "umgeleitete" HF-Wechselstrom auf der Außenseite des Mantelleiters breitet sich als Oberflächen- oder Mantelwelle entlang der Koaxialleiterstruktur aus und erzeugt ein elektromagnetisches Feld um den Mantelleiter, das z. B. für drahtlose Kommunikation und/oder Energieübertragung genutzt werden kann.

Dadurch, dass die (bevorzugt verlustarme bzw. verlustfreie) Abschlussimpedanz in der Praxis konstant ist, bleibt die Impedanz der so geschaffenen "Nahfeldantenne" praktisch unter allen Bedingungen nahezu konstant und erlaubt eine Montage und einen Betrieb in beliebiger Geometrie/Umgebung. Krümmungen, bevorzugt relativ kleine Krümmungen, im Verlauf der Koaxialleiterstruktur begünstigen die Wellenablösung und erhöhen so die Reichweite der Antenne.

Dieser der Erfindung zugrundeliegende Ansatz steht im krassen Gegensatz zum Stand der Technik. Die verblüffenden, unkompliziert vielseitigen Eigenschaften einer solchen Nahfeldantenne sind bisher nicht bekannt. So kann eine erfindungsgemäße Antenne beispielsweise in Meanderform in einer Ladestation am Boden verlegt werden, um bei einem darüber befindlichen Fahrzeug einen elektrischen Energiespeicher zu laden (Kapazitives Aufladen von z. B. eines Akkus des Fahrzeuges). Im Vergleich zu induktiven Ladesystemen bringt das enorme Vorteile, da keine Spulen exakt zueinander positioniert werden müssen. Es reicht in den meisten Fällen schon aus, wenn das Fahrzeug "irgendwie" über der Antenne zum Stehen kommt. Man kann z. B. größere Fahrbahnbereiche bzw. ganze Parkflächen damit "energetisieren".

## Patentansprüche

1. Antennenvorrichtung (10) für Nahbereichsanwendungen, insbesondere RFID-Anwendungen, umfassend
- eine langgestreckte zweipolige Koaxialleiterstruktur (12) mit einem Innenleiter (14) und einem diesen koaxial umgebenden Mantelleiter (16),
- an einem ersten Ende der Koaxialleiterstruktur (12) einen Antennensignal-Anschluss (22, 24), der durch einen Anschlusskontakt (22) am Innenleiter (14) und einen Anschlusskontakt (24) am Mantelleiter (16) gebildet ist, zum Einspeisen eines Antennensendesignals bzw. Ausspeisen eines Antennenempfangssignals, an einem zweiten Ende der Koaxialleiterstruktur (12) eine Abschlussimpedanz (Zterm), die durch einen an einem Anschlusskontakt (28) am Innenleiter (14) und einem Anschlusskontakt (30) am Mantelleiter (16) angeschlossenen Zweipol (Z) gebildet ist, wobei der Zweipol (Z) wenigstens eine Kapazität (C) und/oder wenigstens eine Induktivität (L) umfasst,
**gekennzeichnet dadurch, dass** die Antennenvorrichtung so ausgestaltet ist,
- dass in einem Sendefall ein vom Antennensendesignal erzeugter über den Innenleiter (14) sich ausbreitender das zweite Ende der Koaxialleiterstruktur (12) erreichender HF-Wechselstrom am zweiten Ende der Koaxialleiterstruktur (12) mittels der Abschlussimpedanz (Zterm) auf die Außenseite des Mantelleiters (16) gekoppelt wird, um einen ausgehend vom zweiten Ende der Koaxialleiterstruktur (12) über den Mantelleiter (16) sich ausbreitenden, auf der Außenseite des Mantelleiters (16) fließenden HF-Wechselstrom zu erzeugen, und
- dass in einem Empfangsfall ein vom Antennenempfangssignal erzeugter über den Mantelleiter (16) sich ausbreitender, auf der Außenseite des Mantelleiters (16) fließender, das zweite Ende der Koaxialleiterstruktur (12) erreichender HF-Wechselstrom am zweiten Ende der Koaxialleiterstruktur (12) mittels der Abschlussimpedanz (Zterm) auf den Innenleiter (14) gekoppelt wird, um einen ausgehend vom zweiten Ende der Koaxialleiterstruktur (12) über den Innenleiter (14) sich ausbreitenden HF-Wechselstrom zu erzeugen.

2. Antennenvorrichtung (10) nach Anspruch 1, wobei der Zweipol (Z) wenigstens eine Kapazität (C) und wenigstens eine Induktivität (L) umfasst.

3. Antennenvorrichtung (10) nach einem der vorangehenden Ansprüche, wobei der Zweipol (Z) ferner wenigstens einen ohmschen Widerstand (R) umfasst, wobei ein Widerstandswert dieses ohmschen Widerstandes (R) kleiner als das 0,5-fache, insbesondere kleiner als das 0,2-fache, oder größer als das 5-fache, insbesondere größer als das 10-fache, eines Wellenwiderstandes der Koaxialleiterstruktur (12) ist.

4. Antennenvorrichtung (10) nach einem der vorangehenden Ansprüche, wobei die Abschlussimpedanz (Zterm) wenigstens annähernd einem Wellenwiderstand der Koaxialleiterstruktur (12) entspricht.

5. Antennenvorrichtung (10) nach einem der vorangehenden Ansprüche, wobei der Zweipol (Z) durch eine Schaltungsanordnung auf einem Schaltungsträger (40) ausgebildet ist.

6. Antennenvorrichtung (10) nach einem der vorangehenden Ansprüche, wobei in Längsrichtung der Koaxialleiterstruktur (12) betrachtet im Abstand zum zweiten Ende der Koaxialleiterstruktur (12) ein Gleichtaktstromfilter (54) bzw. eine Oberflächenwellendämpfungseinrichtung (54; 50) angeordnet ist.

7. Antennenvorrichtung (10) nach einem der vorangehenden Ansprüche, wobei die Koaxialleiterstruktur (12) flexibel krümmbar ausgebildet ist.

8. Antennenvorrichtung (10) nach einem der vorangehenden Ansprüche, ferner umfassend
- eine zweite langgestreckte zweipolige Koaxialleiterstruktur (60) mit einem Innenleiter (62) und einem diesen koaxial umgebenden Mantelleiter (64),
- an einem ersten Ende der zweiten Koaxialleiterstruktur (60) ein Sender-/Empfänger-Anschluss (58), der durch einen Anschlusskontakt am Innenleiter (62) und einen Anschlusskontakt am Mantelleiter (64) gebildet ist, zum Anschluss eines Senders (26) und/oder Empfängers für ein mit der Antennenvorrichtung (10) zu sendendes bzw. ein von der Antennenvorrichtung (10) zu empfangendes Signal,
- an einem zweiten Ende der zweiten Koaxialleiterstruktur (60) eine signalkreuzende Kopplung (66) mit dem ersten Ende der Koaxialleiterstruktur (12), mittels welcher der Innenleiter (62) der zweiten Koaxialleiterstruktur (60) mit dem Mantelleiter (16) der Koaxialleiterstruktur (12) gekoppelt ist und der Mantelleiter (64) der zweiten Koaxialleiterstruktur (60) mit dem Innenleiter (14) der Koaxialleiterstruktur (12) gekoppelt ist.

9. Antennenvorrichtung (10) nach Anspruch 8, wobei die signalkreuzende Kopplung (66) gebildet ist durch eine elektrische Verbindung eines Anschlusskontaktes am Innenleiter (62) der zweiten Koaxialleiterstruktur (60) mit einem Anschlusskontakt am Mantelleiter (16) der Koaxialleiterstruktur (12) und eine elektrische Verbindung eines Anschlusskontaktes am Mantelleiter (64) der zweiten Koaxialleiterstruktur (60) mit einem Anschlusskontakt am Innenleiter (14) der Koaxialleiterstruktur (12).

10. Antennenvorrichtung (10) nach Anspruch 8 oder 9, wobei die signalkreuzende Kopplung (66) als ein Vierpol (54) ausgebildet ist, der als eine Schaltungsanordnung auf einem Schaltungsträger (52) ausgebildet ist.

11. Verwendung einer Antennenvorrichtung (10) nach einem der vorangehenden Ansprüche für Nahbereichsanwendungen, insbesondere RFID- und/oder Energiespeicherlade-Anwendungen, zum Senden bzw. Empfangen eines Signals mit einer Trägerfrequenz von mehr als 100 MHz, insbesondere mehr als 400 MHz, und/oder von weniger als 12 GHz, insbesondere weniger als 5 GHz.

## Claims

1. An antenna device (10) for short-range applications, in particular RFID applications, comprising
- an elongated bipolar coaxial conductor structure (12) with an internal conductor (14) and a sheath conductor (16) surrounding it coaxially,
- an antenna signal connection (22, 24) at a first end of the coaxial conductor structure (12), which is formed by a connection contact (22) on the internal conductor (14) and a connection contact (24) on the sheath conductor (16), for feeding in an antenna transmission signal or feeding out an antenna reception signal, respectively,
a terminating impedance (Zterm) at a second end of the coaxial conductor structure (12), which is formed by a two-pole (Z) connected to a connection contact (28) on the internal conductor (14) and a connection contact (30) on the sheath conductor (16), wherein the two-pole (Z) comprises at least one capacitance (C) and/or at least one inductance (L),
**characterized in that** the antenna device is designed such that
- in a transmission case, an HF alternating current generated by the antenna transmission signal and propagating via the internal conductor (14) and reaching the second end of the coaxial conductor structure (12) is coupled with the outside of the sheath conductor (16) at the second end of the coaxial conductor structure (12) by means of the terminating impedance (Zterm) in order to generate an HF alternating current that originates from the second end of the coaxial conductor structure (12) and propagates via the sheath conductor (16) and flows on the outside of the sheath conductor (16), and
- in a reception case, an HF alternating current generated by the antenna reception signal and propagating via the sheath conductor (16) and flowing on the outside of the sheath conductor (16) and reaching the second end of the coaxial conductor structure (12) is coupled with the internal conductor (14) at the second end of the coaxial conductor structure (12) by means of the terminating impedance (Zterm) in order to generate an HF alternating current that originates from the second end of the coaxial conductor structure (12) and propagates via the internal conductor (14).

2. The antenna device (10) according to claim 1, wherein the two-pole (Z) comprises at least one capacitance (C) and at least one inductance (L).

3. The antenna device (10) according to any of the preceding claims, wherein the two-pole (Z) further comprises at least one ohmic resistor (R), a resistance value of this ohmic resistor (R) being less than 0.5 times, in particular less than 0.2 times, or greater than 5 times, in particular greater than 10 times, a characteristic impedance of the coaxial conductor structure (12).

4. The antenna device (10) according to any of the preceding claims, wherein the terminating impedance (Zterm) corresponds at least approximately to a characteristic impedance of the coaxial conductor structure (12).

5. The antenna device (10) according to any of the preceding claims, wherein the two-pole (Z) is formed by a circuit arrangement on a circuit carrier (40).

6. The antenna device (10) according to any of the preceding claims, wherein viewed in the longitudinal direction of the coaxial conductor structure (12) at a distance from the second end of the coaxial conductor structure (12) a common mode current filter (54) or a surface wave attenuation device (54; 50) is arranged.

7. The antenna device (10) according to any of the preceding claims, wherein the coaxial conductor structure (12) is designed to be flexibly bendable.

8. The antenna device (10) according to any of the preceding claims, further comprising
- a second elongated bipolar coaxial conductor structure (60) with an internal conductor (62) and a sheath conductor (64) surrounding it coaxially,
- a transmitter/receiver connection (58) at a first end of the second coaxial conductor structure (60), which is formed by a connection contact on the internal conductor (62) and a connection contact on the sheath conductor (64), for connecting a transmitter (26) and/or a receiver for a signal to be transmitted by the antenna device (10) or a signal to be received by the antenna device (10), respectively,
- at a second end of the second coaxial conductor structure (60), a signal-crossing coupling (66) with the first end of the coaxial conductor structure (12), by means of which the internal conductor (62) of the second coaxial conductor structure (60) is coupled with the sheath conductor (16) of the coaxial conductor structure (12) and the sheath conductor (64) of the second coaxial conductor structure (60) is coupled with the internal conductor (14) of the coaxial conductor structure (12).

9. The antenna device (10) according to claim 8, wherein the signal-crossing coupling (66) is formed by an electrical connection of a connection contact on the internal conductor (62) of the second coaxial conductor structure (60) with a connection contact on the sheath conductor (16) of the coaxial conductor structure (12) and an electrical connection of a connection contact on the sheath conductor (64) of the second coaxial conductor structure (60) with a connection contact on the internal conductor (14) of the coaxial conductor structure (12).

10. The antenna device (10) according to claim 8 or 9, wherein the signal-crossing coupling (66) is formed as a four-pole (54) which is formed as a circuit arrangement on a circuit carrier (52).

11. A use of an antenna device (10) according to any of the preceding claims for short-range applications, in particular RFID and/or energy storage charging applications, for transmitting or receiving a signal with a carrier frequency of more than 100 MHz, in particular more than 400 MHz, and/or less than 12 GHz, in particular less than 5 GHz.

## Revendications

1. Dispositif d'antenne (10) pour des applications à champ proche en particulier des applications d'identification par radiofréquence (IRF) comprenant
- une structure de conducteur coaxial bipolaire allongée (12) avec un conducteur intérieur (14) et un conducteur sous gaine (16) entourant celui-ci coaxialement,
- à une première extrémité de la structure de conducteur coaxial (12), une connexion de signaux d'antenne (22, 24), qui est formée par un contact de connexion (22) sur le conducteur intérieur (14) et un contact de connexion (24) sur le conducteur sous gaine (16) pour l'arrivée d'un signal d'émission d'antenne ou le départ d'un signal de réception d'antenne, à une deuxième extrémité de la structure de conducteur coaxial (12), une impédance terminale (Zterm), qui est formée par un dipôle (Z) raccordé à un contact de connexion (28) sur le conducteur intérieur (14) et un contact de connexion (30) sur le conducteur sous gaine (16), sachant que le dipôle (Z) comprend au moins une capacitance (C) et/ou au moins une inductance (L),
**caractérisé en ce que** le dispositif d'antenne est configuré de telle manière
- que dans un cas d'émission, un courant alternatif HF à la deuxième extrémité de la structure de conducteur coaxial (12), généré par le signal d'émission d'antenne, se propageant par le conducteur intérieur (14), atteignant la deuxième extrémité de la structure de conducteur coaxial (12) est couplé au moyen de l'impédance terminale (Zterm) au côté extérieur du conducteur sous gaine (16) pour produire un courant alternatif HF passant sur le côté extérieur du conducteur sous gaine (16), partant de la deuxième extrémité de la structure de conducteur coaxial (12), se propageant par le conducteur sous gaine (16), et
- que dans un cas de réception, un courant alternatif HF sur la deuxième extrémité de la structure de conducteur coaxial (12), généré par le signal de réception d'antenne, se propageant par le conducteur sous gaine (16), passant sur le côté extérieur du conducteur sous gaine (16), atteignant la deuxième extrémité de la structure de conducteur coaxial (12), est couplé au moyen de l'impédance terminale (Zterm) sur le conducteur intérieur (14) pour produire un courant alternatif HF partant de la deuxième extrémité de la structure de conducteur coaxial (12) se propageant par le conducteur intérieur (14).

2. Dispositif d'antenne (10) selon la revendication 1, sachant que le dipôle (Z) comprend au moins une capacitance (C) et au moins une inductance (L).

3. Dispositif d'antenne (10) selon l'une quelconque des revendications précédentes, sachant que le dipôle (Z) comprend en plus au moins une résistance ohmique (R), sachant qu'une valeur de résistance de cette résistance ohmique (R) est plus faible que 0,5 fois, en particulier plus faible que 0,2 fois, ou supérieure à 5 fois, en particulier supérieure à 10 fois, une impédance caractéristique de la structure de conducteur coaxial (12).

4. Dispositif d'antenne (10) selon l'une quelconque des revendications précédentes, sachant que l'impédance terminale (Zterm) correspond au moins à peu près à une impédance caractéristique de la structure de conducteur coaxial (12).

5. Dispositif d'antenne (10) selon l'une quelconque des revendications précédentes, sachant que le dipôle (Z) est constitué par un système de circuit sur un support de circuit (40).

6. Dispositif d'antenne (10) selon l'une quelconque des revendications précédentes, sachant que dans le sens longitudinal de la structure de conducteur coaxial (12) considérée à distance de la deuxième extrémité de la structure de conducteur axial (12) est disposé un filtre de courant en mode commun (54) ou un dispositif d'amortissement des ondes superficielles (54, 50).

7. Dispositif d'antenne (10) selon l'une quelconque des revendications précédentes, sachant que la structure de conducteur coaxial (12) est constituée de manière flexible pouvant être courbée.

8. Dispositif d'antenne (10) selon l'une quelconque des revendications précédentes, comprenant en plus
- une deuxième structure de conducteur coaxial (60) bipolaire allongée avec un conducteur intérieur (62) et un conducteur sous gaine (64) entourant celui-ci coaxialement,
- à une première extrémité de la deuxième structure de conducteur coaxial (60), une connexion émetteur/récepteur (58), qui est formée par un contact de connexion sur le conducteur intérieur (62) et un contact de connexion sur le conducteur sous gaine (64) pour connecter un émetteur (26) et/ou un récepteur pour un signal à émettre avec le dispositif d'antenne (10) ou un signal à recevoir du dispositif d'antenne (10),
- à une deuxième extrémité de la deuxième structure de conducteur coaxial (60), un couplage (66) à croisement de signaux avec la première extrémité de la structure de conducteur coaxial (12) au moyen duquel le conducteur intérieur (62) de la deuxième structure de conducteur coaxial (60) est couplé au conducteur sous gaine (16) de la structure de conducteur coaxial (12) et le conducteur sous gaine (64) de la deuxième structure de conducteur coaxial (60) est couplé au conducteur intérieur (14) de la structure de conducteur coaxial (12).

9. Dispositif d'antenne (10) selon la revendication 8, sachant que le couplage (66) à croisement de signaux est formé par une liaison électrique d'un contact de connexion sur le conducteur intérieur (62) de la deuxième structure de conducteur coaxial (60) avec un contact de connexion sur le conducteur sous gaine (16) de la structure de conducteur coaxial (12) et une liaison électrique d'un contact de connexion sur le conducteur sous gaine (64) de la deuxième structure de conducteur coaxial (60) avec un contact de connexion sur le conducteur intérieur (14) de la structure de conducteur coaxial (12).

10. Dispositif d'antenne (10) selon la revendication 8 ou 9, sachant que le couplage (66) à croisement de signaux est constitué comme un quadripôle (54), qui est constitué sur un support de circuit (52) sous la forme d'un système de circuit.

11. Utilisation d'un dispositif d'antenne (10) selon l'une quelconque des revendications précédentes pour des utilisations à champ proche, en particulier des utilisations d'identification par radiofréquence (IRF) et/ou de charge d'accumulation d'énergie pour émettre ou recevoir un signal avec une fréquence porteuse de plus de 100 MHz, en particulier de plus de 400 MHz, et/ou de moins de 12 GHz, en particulier de moins de 5 GHz.
